(19) Europäisches Patentamt
European Patent Office
Office européen des brevets

(11) EP 4 565 632 B1

(12) # EUROPÄISCHE PATENTSCHRIFT

(45) Veröffentlichungstag und Bekanntmachung des Hinweises auf die Patenterteilung:
**08.04.2026 Patentblatt 2026/15**

(21) Anmeldenummer: **23751011.0**

(22) Anmeldetag: **01.08.2023**

(51) Internationale Patentklassifikation (IPC):
***C08F 279/04*** *(2006.01)* ***C08L 55/02*** *(2006.01)*
***C08F 2/00*** *(2006.01)* ***C08L 25/12*** *(2006.01)*
***C08L 69/00*** *(2006.01)* ***C08L 77/02*** *(2006.01)*

(52) Gemeinsame Patentklassifikation (CPC):
(C-Sets verfügbar)
**C08F 279/04; C08F 2/22; C08F 285/00; C08L 25/12; C08L 55/02; C08L 69/00; C08L 77/02;**
C08L 2205/025; C08L 2205/03; C08L 2205/035
(Forts.)

(86) Internationale Anmeldenummer:
**PCT/EP2023/071267**

(87) Internationale Veröffentlichungsnummer:
**WO 2024/028309 (08.02.2024 Gazette 2024/06)**

(54) **THERMOPLASTISCHE ABS-FORMMASSEN MIT EINER GUTEN EIGENSCHAFTSKOMBINATION VON VERARBEITBARKEIT UND OBERFLÄCHENQUALITÄT**

THERMOPLASTIC ABS MOULDING COMPOUND WITH A GOOD PROPERTY COMBINATION OF PROCESSABILITY AND SURFACE QUALITY

COMPOSÉ DE MOULAGE ABS THERMOPLASTIQUE PRÉSENTANT UNE BONNE COMBINAISON DE PROPRIÉTÉS D'APTITUDE AU TRAITEMENT ET DE QUALITÉ DE SURFACE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **04.08.2022 EP 22188867**

(43) Veröffentlichungstag der Anmeldung:
**11.06.2025 Patentblatt 2025/24**

(73) Patentinhaber: **INEOS Styrolution Group GmbH**
**60325 Frankfurt (DE)**

(72) Erfinder:
- **MICHAELIS DE VASCONCELLOS, Janna**
  **45549 Sprockhövel (DE)**
- **MICHELS, Gisbert**
  **51375 Leverkusen (DE)**
- **JANSEN, Ulrich**
  **41541 Dormagen (DE)**
- **SCHNABEL, Thorsten**
  **26127 Oldenburg (DE)**
- **LEBBE, Dominique**
  **2530 Boechout (BE)**
- **DE VET, Walter**
  **5126 BJ Gilze (NL)**

(74) Vertreter: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) Entgegenhaltungen:
**WO-A1-01/62848**
**WO-A1-2016/184765**
**WO-A1-2017/093468**
**US-B1- 6 716 916**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 565 632 B1

(52) Gemeinsame Patentklassifikation (CPC): (Forts.)

C-Sets
**C08F 279/04, C08F 212/08, C08F 220/44;**
**C08F 285/00, C08F 212/08, C08F 220/44;**
**C08L 25/12, C08L 55/02, C08L 55/02, C08K 5/20, C08K 5/098, C08L 83/04;**
**C08L 55/02, C08L 55/02;**
**C08L 69/00, C08L 25/12, C08L 55/02, C08L 55/02;**
**C08L 77/02, C08L 55/02, C08L 55/02, C08L 25/12, C08L 25/12**

## Beschreibung

Die vorliegende Erfindung betrifft ABS-Pfropfkautschuke mit einer hohen Latexstabilität und ein Verfahren zu deren Herstellung, sowie diese enthaltende thermoplastische ABS-Formmassen mit einer guten Eigenschaftskombination von Verarbeitbarkeit und Oberflächenqualität, sowie ein Verfahren zu deren Herstellung, ferner Formkörper, die aus der erfindungsgemäßen thermoplastischen Formmasse erhältlich sind, und deren Verwendung.

Seit Jahren werden Acrylnitril-Butadien-Styrol-Copolymere (ABS) und Formmassen des ABS-Typs, die noch weitere Comonomere (als Bausteine) und/oder weitere thermoplastische Komponenten enthalten können, als thermoplastische Formmassen für die Herstellung von Formteilen für unterschiedliche Anwendungen verwendet.

Das Eigenschaftsspektrum dieser thermoplastischen Formmassen kann in weiten Bereichen variiert werden. Besonders interessant für viele Anwendungen ist, dass derartige Formmassen eine besonders hohe Zähigkeit (etwa Schlagzähigkeit und/oder Kerbschlagzähigkeit) aufweisen. Zudem ist gute Verarbeitbarkeit (thermoplastische Fließfähigkeit, MVR), Wärmeformbeständigkeit und Oberflächenglanz gewünscht.

EP-A 0845496 beschreibt eine Mischung aus zwei ABS-Pfropfcopolymeren I und II, wobei Pfropfcopolymer I erhalten wird durch Emulsionspolymerisation einer Mischung von Styrol und Acrylnitril in Gegenwart eines Butadienpolymerlatex A (Teilchendurchmesser $d_{50}$: ≤ 330 nm) und eines Butadienpolymerlatex B ($d_{50}$: ≥ 370 nm), und Pfropfcopolymer II erhalten wird durch Emulsionspolymerisation einer Mischung von Styrol und Acrylnitril in Gegenwart eines Butadienpolymerlatex C ($d_{50}$: 110 bis 150 nm). Die Pfropfpolymerisation erfolgt jeweils mittels anorganischer Peroxidsalzinitiierung, wobei die Pfropfgrundlage und 0,5 Gew.-Teile Peroxidsalz vorgelegt, und über 4 Stunden das Monomergemisch zudosiert werden. Im Anschluss daran wird noch 4 Stunden nachpolymerisiert.

Ferner werden ABS-Formmassen enthaltend die ABS-Pfropfcopolymermischung und kautschukfreie SAN-Copolymere beschrieben.

WO 2001/62848 offenbart eine Polymerzusammensetzung enthaltend I) ein Pfropfcopolymer (I) erhalten durch Emulsionspolymerisation von Styrol und Acrylnitril, in Gegenwart eines Butadienpolymerlatex (A) mit einem mittleren Teilchendurchmesser $d_{50}$ von 230 bis 330 nm, wobei der Latex (A) durch Saatpolymerisation erhalten wurde, ein II) Pfropfcopolymer (II) erhalten durch Emulsionspolymerisation von Styrol und Acrylnitril in Gegenwart eines Butadienpolymerlatex (B) mit $d_{50}$ von 340 bis 480 nm, wobei der Latex (B) durch Saatpolymerisation mittels Latex (C) erhalten wurde, III) ein Pfropfcopolymer (III) erhalten durch Emulsionspolymerisation von Styrol und Acrylnitril, in Gegenwart eines Butadienpolymerlatex (C) mit einem mittleren Teilchendurchmesser $d_{50}$ von 80 bis 220 nm, wobei der Latex (C) durch Saatpolymerisation erhalten wurde, und als Saatlatex für (A) und (B) verwendet wird, sowie IV) ein kautschukfreies SAN-Copolymer. Die Pfropfpolymerisation erfolgt jeweils mittels anorganischer Peroxidsalzinitiierung, wobei die Butadienpolymerlatices (A) und (B), oder (C), und jeweils 0,5 Gew.-Teile Peroxidsalz vorgelegt, und über 6 Stunden das Monomergemisch zudosiert werden.

WO 2016/184765 und WO 2017/093468 beschreiben eine Mischung aus zwei ABS-Pfropfcopolymeren B-I und B-II, wobei Pfropfcopolymer B-I erhalten wird durch Emulsionspolymerisation einer Mischung von Styrol und Acrylnitril in Gegenwart einer Polybutadien-Pfropfgrundlage B1-A (mittlerer Teilchendurchmesser $d_{50}$: 230 bis 330 nm) und einer Polybutadien-Pfropfgrundlage B1-B ($d_{50}$: 340 bis 480 nm), wobei die Pfropfgrundlagen B1-A und B1-B mittels Saatpolymerisation erhalten wurden, und Pfropfcopolymer B-II erhalten wird durch Emulsionspolymerisation einer Mischung von Styrol und Acrylnitril in Gegenwart einer Polybutadien-Pfropfgrundlage B1-C ($d_{50}$: 10 bis 220 nm). Die Emulsionspolymerisation wird insbesondere innerhalb von 2 bis 10 h, z.B. 3 bis 7 h durchgeführt. Beispielhaft erfolgt die Pfropfpolymerisation jeweils mittels anorganischer Peroxidsalzinitiierung, wobei die Pfropfgrundlage und 0,25 Gew.-Teile Peroxidsalz vorgelegt, dann das Monomerengemisch über 5 Stunden, und parallel dazu 0,25 Gew.-Teile Peroxidsalz über einen Zeitraum von 5 Stunden dosiert werden. Ferner werden ABS-Formmassen beschrieben, enthaltend die ABS-Pfropfcopolymermischung und kautschukfreie SAN-Copolymere.

WO 2018/197377 offenbart ebenfalls eine Mischung aus zwei ABS-Pfropfcopolymeren B-I und B-II wie zuvor beschrieben. Pfropfcopolymere B-I-a und B-II werden erhalten, indem die Pfropfgrundlagen B1-A und B1-B, oder B1-C, sowie jeweils 0,5 Gew.-Teile Peroxidsalz vorgelegt werden, und danach Styrol und Acrylnitril über 6 Stunden zudosiert werden. Pfropfcopolymere B-I-b werden erhalten, indem zu den Pfropfgrundlagen B1-A und B1-B Styrol und Acrylnitril innerhalb von 4 Stunden dosiert, und gleichzeitig über 9 Stunden Peroxid und Ascorbat zudosiert werden. Ferner werden ABS-Formmassen enthaltend die ABS-Pfropfcopolymermischung und SAN-Copolymere beschrieben.

Von Nachteil bei den nach dem Stand der Technik erhaltenen ABS-Pfropfcopolymeren ist oftmals eine für die geforderte Qualität der ABS-Formmassen zu hohe Stippenzahl.

Stippen können während des Herstellprozesses an verschiedenen Stufen, beispielsweise während der Pfropfung der Kautschukgrundlagen mit Pfropfmonomeren durch Koagulat-Bildung entstehen. Diese Koagulate sind dann im weiteren Herstellprozess die Grundlage für die in den Formmassen vom ABS-Typ enthaltenden Stippen. Die Bildung dieser Stippen ist prinzipiell nicht vermeidbar, muss aber im Sinne einer verbesserten Oberflächenqualität vermindert werden.

Es besteht daher ein Bedürfnis, ABS-Pfropfkautschuke mit einer höheren Latexstabilität und geringerer

Koagulatbildung bereitzustellen. Weiterhin besteht ein Bedürfnis, ABS-Formmassen mit einer verbesserten Oberflächenqualität, insbesondere einer geringeren Stippenanzahl, sowie ein energie- und Resourcen-schonendes Verfahren zur Herstellung der ABS-Pfropfcopolymere bzw. der ABS-Formmassen bereitzustellen.

Diese Aufgaben werden durch die erfindungsgemäße ABS-Pfropfkautschukmischung, die erfindungsgemäße ABS-Formmasse, und das erfindungsgemäße Verfahren gemäß den Ansprüchen gelöst. Die Erfindung betrifft eine Mischung von Polymeren.

Ein Gegenstand der Erfindung ist eine Mischung P enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 95:5 bis 50:50, bevorzugt 80:20 bis 65:35, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen, bevorzugt anorganischen, Peroxidverbindung als Initiator, in Gegenwart von:

mindestens einem Polybutadienlatex A mit einem mittleren Teilchendurchmesser $d_{50}$ von 230 bis 330 nm, bevorzugt 240 bis 320 nm, insbesondere 250 bis 310 nm, und mindestens einem Polybutadienlatex B mit einem mittleren Teilchendurchmesser $d_{50}$ von 340 bis 480 nm, bevorzugt 350 bis 470 nm, insbesondere 360 bis 460 nm, wobei die Polybutadienlatices A und B mittels Saatpolymerisation ausgehend von mindestens einem, vorzugsweise einem, Polybutadienlatex C (als Saatlatex) mit einem mittleren Teilchendurchmesser $d_{50}$ von 10 bis 220 nm, bevorzugt 20 bis 210 nm, insbesondere 30 bis 200 nm, erhalten wurden;

(II) mindestens einen Pfropfkautschuk P-II, erhalten durch Emulsionspolymerisation von Styrol und Acrylnitril im Gewichtsverhältnis Styrol:Acrylnitril von 95:5 bis 50:50, bevorzugt 80:20 bis 65:35, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des mindestens einen Polybutadienlatex C mit einem mittleren Teilchendurchmesser $d_{50}$ von 10 bis 220 nm, bevorzugt 30 bis 200 nm; und

(III) optional ein oder mehrere Additive und/oder Verarbeitungshilfsmittel D;
dadurch gekennzeichnet, dass - unabhängig voneinander - bei der Herstellung des Pfropfkautschuks P-I und bei der Herstellung des Pfropfkautschuks P-II,

- die Dosierung der Monomere - d.h. von Styrol und Acrylnitril, gegebenenfalls teilweise ersetzt durch alpha-Methylstyrol, Methylmethacrylat und/oder N-Phenylmaleinimid, - und die Dosierung des Initiators gleichzeitig gestartet werden;
- die Dosierung der Monomere kontinuierlich innerhalb 3,50 bis 4,25 Stunden, bevorzugt 3,75 bis 4,25 Stunden, insbesondere 4 Stunden, erfolgt; und
- die gesamte Menge des Initiators innerhalb von 4,50 bis 5,25 h, bevorzugt 4,75 bis 5,25 h, insbesondere 5 h, dosiert wird, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile pro Stunde, (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde, bevorzugt 0,05 bis 0,06 Gew.-Teile pro Stunde, beträgt.

Bevorzugt besteht die Mischung P aus den vorstehend genannten Komponenten (I) und (II) (Pfropfkautschuk P-I und P-II), sowie gegebenenfalls Komponente (III) (Additive und/oder Verarbeitungshilfsmittel D).

Die Begriffe "Pfropfkautschuk", "Pfropfkautschukpolymerisat" und "Pfropfkautschukpolymer" sind hierbei im weitesten Sinne synonym zu verstehen als Pfropfcopolymer mit einer Pfropfgrundstufe (Kern) aus Polybutadienlatex und einer aus thermoplastischem Material auf Basis von Styrol und Acrylnitril, sowie gegebenenfalls der zuvor beschriebenen Comonomere (d.h. alpha-Methylstyrol, Methylmethacrylat und/oder N-Phenylmaleinimid), bestehenden Pfropfhülle.

Ebenso sind hier die Begriffe "Butadienlatex", "Polybutadienlatex", "Butadienpolymerlatex" und "Butadienpolymeratlatex" im weitesten Sinne synonym zu verstehen als partikuläre Partikel, die hauptsächlich, daher zu mindestens 50 Gew.-% aus Butadien-Einheiten bestehen. Unter "Latizes" sind Emulsionen und Dispersionen im weitesten Sinne synonym zu verstehen.

Es wird allgemein vom Fachmann verstanden, dass mit "Styrol", "Acrylnitril", "Butadien" usw. die von dem jeweiligen Monomer abgeleiteten Struktureinheiten, die in die (Co)polymer-Struktur eingebettet sind, gemeint sind.

Gewichtsangaben, Angaben und Definitionen von Gewichtsverhältnissen, Angaben in Gewichtsprozent (Gew.-%) und Angaben in Gewichtsteilen (Gew.-Teilen) beziehen sich in der gesamten Anmeldung allgemein auf die jeweiligen

Gewichte der Trockensubstanz (gerechnet als Feststoff), daher ohne enthaltene bzw. aufgesogene Flüssigkeiten (z.B. Wasser, Elektrolytlösung und ungebundene Monomere). "Gewichtsverhältnis" und "Masseverhältnis" sind synonym zu verstehen.

Wie hierin verwendet, sollen die Angaben in Gewichtsprozent (Gew.-%) so verstanden werden, dass die gesamte Zusammensetzung (z.B. der Mischung P oder der Formmasse F) stets 100 Gew.-% beträgt. Wenn eine Zusammensetzung einen bestimmten Anteil einer oder mehrerer Komponente(n) umfasst oder enthält, beträgt der Anteil an einer oder mehrerer anderer/anderen nicht-genannten Komponente(n) folglich 100 Gew.-% abzüglich (minus) des Anteil der einen oder mehreren genannten Komponente(n). Wenn eine Zusammensetzung aus bestimmten Komponenten besteht, beträgt der Anteil dieser Komponenten in der Summe 100 Gew.-%. Der Fachmann wird leicht ermitteln, wie die restlichen Komponenten bei der Vorgabe des Anteils anderer Komponenten sein können.

Der mittlere Teilchendurchmesser $d_{50}$ kann durch Scheibenzentrifugen-Messung wie in den Beispielen beschrieben ermittelt werden. Der Teilchendurchmesser $d_{50}$, der auch als $d_{50}$-Wert der integralen Massenverteilung bezeichnet wird, ist dabei als der Wert definiert, bei dem 50 Gew.-% der Teilchen einen kleineren und 50 Gew.-% der Teilchen einen größeren Durchmesser als den $d_{50}$-Wert aufweisen.

Für die Messung der Teilchendurchmesser-Verteilung mit der Scheibenzentrifuge DC 24000 von CPS Instruments Inc., die mit einer Scheibe mit niedriger Dichte ausgestattet ist, wurde eine wässrige Zuckerlösung von 17,1 mL mit einem Dichtegradienten von 8 bis 20 Gew.-% Saccharose in der Zentrifugenscheibe verwendet, um ein stabiles Flotationsverhalten der Partikel zu erreichen. Zur Kalibrierung wurde ein Polybutadienlatex mit einer engen Verteilung und einer mittleren Partikelgröße von 405 nm verwendet. Die Messungen wurden bei einer Rotationsgeschwindigkeit der Scheibe von 24.000 U/min durchgeführt, indem 0,1 mL einer verdünnten Kautschukdispersion in eine wässrige 24%ige Saccharoselösung injiziert wurden. Die Massenverteilung der Teilchendurchmesser wurde mit Hilfe der Mie-Theorie berechnet.

<u>Pfropfkautschuke P-I und P-II</u>

Bevorzugt wird der Pfropfkautschuk P-I durch Emulsionspolymerisation von Styrol und Acrylnitril im Styrol:Acrylnitril-Gewichtsverhältnis von 80:20 bis 65:35 in Gegenwart der Polybutadienlatices A und B erhalten. Bevorzugt beträgt das Styrol:Acrylnitril-Gewichtsverhältnis 77:23 bis 70:30.

Ein Ausführungsbeispiel eines Pfropfkautschuks P-I ist auch dem untenstehenden experimentellen Beispielteil zu entnehmen.

Bevorzugt wird der Pfropfkautschuk P-II durch Emulsionspolymerisation von Styrol und Acrylnitril im Styrol:Acrylnitril-Gewichtsverhältnis von 80:20 bis 65:35 in Gegenwart des Polybutadienlatex C erhalten. Besonders bevorzugt beträgt das Styrol:Acrylnitril-Gewichtsverhältnis 77:23 bis 70:30. Ein bevorzugtes Ausführungsbeispiel eines Pfropfkautschuks P-II ist auch dem untenstehenden experimentellen Beispielteil zu entnehmen.

Der Polybutadienlatex A weist einen mittleren Teilchendurchmesser $d_{50}$ von 230 bis 330 nm, bevorzugt von 240 bis 320 nm, insbesondere 250 bis 310 nm, auf. Bevorzugt weist der Polybutadienlatex A einen Gelgehalt von 30 bis 80 Gew.-%, besonders bevorzugt 40 bis 75 Gew.-%, insbesondere 45 bis 70 Gew.-%, auf.

Gemäß einer bevorzugten Ausführungsform weist der Polybutadienlatex A einen mittleren Teilchendurchmesser $d_{50}$ von 240 bis 320, insbesondere 250 bis 310 nm, und einen Gelgehalt von 30 bis 80 Gew.-%, bevorzugt 40 bis 75 Gew.-%, insbesondere 45 bis 70 Gew.-%, auf. Besonders bevorzugt weist bei der Polybutadienlatex A einen mittleren Teilchendurchmesser $d_{50}$ von 250 bis 310 nm und einen Gelgehalt von 45 bis 70 Gew.-% auf.

Ein besonders bevorzugtes Ausführungsbeispiel eines Polybutadienlatex A ist auch dem untenstehenden experimentellen Beispielteil zu entnehmen.

Die angegebenen Werte für die jeweiligen Gelgehalte können durch das hierzu übliche Verfahren durch Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart) ermittelt werden. Die Gelgehalte der Polybutadienlatices A, B und C und optional weiterer Latices können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z. B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes).

Der Polybutadienlatex B weist einen mittleren Teilchendurchmesser $d_{50}$ von 340 bis 480 nm, bevorzugt von 350 bis 470 nm, insbesondere 360 bis 460 nm, auf. Bevorzugt weist der Polybutadienlatex B einen Gelgehalt von 50 bis 95 Gew.-%, insbesondere 55 bis 90 Gew.-%, auf.

Gemäß einer bevorzugten Ausführungsform weist der Polybutadienlatex B einen mittleren Teilchendurchmesser $d_{50}$ von 350 bis 470, insbesondere 360 bis 460 nm, und einen Gelgehalt von 50 bis 95 Gew.-%, insbesondere 55 bis 90 Gew.-%, auf. Besonders bevorzugt weist der Polybutadienlatex B einen mittleren Teilchendurchmesser $d_{50}$ von

360 bis 460 nm und einen Gelgehalt von 55 bis 90 Gew.-% auf.

Ein bevorzugtes Ausführungsbeispiel eines Polybutadienlatex B ist auch dem untenstehenden experimentellen Beispielteil zu entnehmen.

Der mindestens eine, bevorzugt eine, Polybutadienlatex C weist einen mittleren Teilchendurchmesser $d_{50}$ von 10 bis 220 nm, bevorzugt von 20 bis 210 nm, insbesondere 30 bis 200 nm, auf. Bevorzugt weist der Polybutadienlatex C einen Gelgehalt von 30 bis 98 Gew.-%, bevorzugt 40 bis 95 Gew.-%, insbesondere 50 bis 92 Gew.-%, auf.

Gemäß einer bevorzugten Ausführungsform weist der Polybutadienlatex C einen mittleren Teilchendurchmesser $d_{50}$ von 20 bis 210 nm, insbesondere 30 bis 200 nm, und einen Gelgehalt von 30 bis 98 Gew.-%, bevorzugt 40 bis 95 Gew.-%, insbesondere 50 bis 92 Gew.-%, auf.

Besonders bevorzugt weist der Polybutadienlatex C einen mittleren Teilchendurchmesser $d_{50}$ von 30 bis 200 nm und einen Gelgehalt von 50 bis 92 Gew.-% auf.

Bei Verwendung von Polybutadienlatex C mit mittleren Teilchendurchmessern $d_{50}$ oberhalb 80 nm, vorzugsweise oberhalb 90 nm und bevorzugt oberhalb 100 nm wird auch dieser Polybutadienlatex C selbst vorzugsweise durch Saatpolymerisation hergestellt. Dazu werden vorzugsweise ein Polybutadienlatex mit einem mittleren Teilchendurchmessern $d_{50}$ von 10 bis 60 nm, vorzugsweise 20 bis 50 nm, eingesetzt. Der hierzu verwendbare Saatlatex C' (vorzugsweise ein Polybutadienlatex) besitzt bevorzugt einen mittleren Teilchendurchmesser $d_{50}$ von 10 bis 60 nm, vorzugsweise 20 bis 50 nm. Der Gelgehalt des Saatlatex C' beträgt 10 bis 95 Gew.-%, vorzugsweise 20 bis 90 Gew.-% und besonders bevorzugt 30 bis 85 Gew.-%.

Ein bevorzugtes Ausführungsbeispiel eines Polybutadienlatex C ist auch dem untenstehenden experimentellen Beispielteil zu entnehmen.

Bevorzugt ist eine erfindungsgemäße Mischung P wie zuvor beschrieben enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 80:20 bis 65:35 unter Verwendung mindestens einer anorganischen Peroxidverbindung als Initiator, in Gegenwart von:

mindestens einem Polybutadienlatex A mit einem mittleren Teilchendurchmesser $d_{50}$ von 250 bis 310 nm und einem Gelgehalt von 45 bis 70 Gew.-%, und

mindestens einem Polybutadienlatex B mit einem mittleren Teilchendurchmesser $d_{50}$ von 360 bis 460 nm und einem Gelgehalt von 55 bis 90 Gew.-%,

wobei die Polybutadienlatices A und B mittels Saatpolymerisation ausgehend von einem mindestens einem, vorzugsweise einem, Polybutadienlatex C mit einem mittleren Teilchendurchmesser $d_{50}$ von 30 bis 200 nm und einem Gelgehalt von 50 bis 92 Gew.-% (als Saatlatex) erhalten wurden,

wobei das Gewichtsverhältnis der Feststoffe der Polybutadienlatices A:B von 90:10 bis 10:90, bevorzugt 80:20 bis 20:80, besonders bevorzugt 60:40 bis 40:60, beträgt;

(II) mindestens einen Pfropfkautschuk P-II, erhalten durch Emulsionspolymerisation von Styrol und Acrylnitril im Gewichtsverhältnis Styrol:Acrylnitril von 80:20 bis 65:35 unter Verwendung mindestens einer anorganischen Peroxidverbindung als Initiator, in Gegenwart des mindestens einen Polybutadienlatex C mit einem mittleren Teilchendurchmesser $d_{50}$ von 30 bis 200 nm und einem Gelgehalt von 50 bis 92 Gew.-%; und

(III) optional ein oder mehrere Additive und/oder Verarbeitungshilfsmittel D;

worin das Gewichtsverhältnis der Pfropfkautschuke P-I:P-II von 70:30 bis 35:65, bevorzugt 55:45 bis 60:40, beträgt.

Die Polybutadienlatices A und B, und gegebenenfalls C, werden, jeweils unabhängig voneinander, nach einem Saatpolymerisationstechnik-Verfahren hergestellt, wobei durch Emulsionspolymerisation von Butadien (und gegebenenfalls weiteren Comonomeren) zunächst ein feinteiliges Polybutadien(co)polymer als Saatlatex hergestellt und dann dieser durch weiteren Umsatz mit Butadien (und gegebenenfalls weiteren Comonomeren) zu größeren Teilchen weiterpolymerisiert wird (siehe z. B. in Houben-Weyl, Methoden der Organischen Chemie, Makromolekulare Stoffe Teil 1, S. 339 (1961), Thieme Verlag Stuttgart). Dabei wird vorzugsweise unter Verwendung des Saat-Batch-Verfahrens oder Verwendung des Saat-Zulauf-Verfahrens gearbeitet.

Als Saatlatex für die Polybutadienlatices A und B wird Polybutadienlatex C eingesetzt.

Bevorzugt ist der Polybutadienlatex C hergestellt aus:

50 bis 100 Gew.-%, bevorzugt 80 bis 100 Gew.-%, insbesondere 90 bis 100 Gew.-%, Butadien; und

0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus: Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen

aus zwei oder mehr davon, insbesondere Styrol und/oder Acrylnitril.

Besonders bevorzugt ist der Polybutadienlatex C hergestellt aus:

90 bis 100 Gew.-% Butadien, und
0 bis 10 Gew.-% Styrol und/oder Acrylnitril.

Ganz besonders bevorzugt ist der Polybutadienlatex C ein Butadien-Homopolymer-Latex. Ein besonders bevorzugtes Ausführungsbeispiel der Zusammensetzung eines Polybutadienlatex C ist auch dem untenstehenden experimentellen Beispielteil zu entnehmen.

Bevorzugt ist der Polybutadienlatex A hergestellt aus:
50 bis 100 Gew.-%, bevorzugt 80 bis 100 Gew.-%, insbesondere 90 bis 100 Gew.-%, Butadien; und 0 bis 50 Gew.-%, bevorzugt 0 bis 20 Gew.-%, insbesondere bevorzugt 0 bis 10 Gew.-%, von mit Butadien copolymerisierbaren Monomeren (Co-Monomeren), bevorzugt Monomeren ausgewählt aus der Gruppe bestehend aus:
Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt ist der Polybutadienlatex A hergestellt aus:

90 bis 100 Gew.-% Butadien, und
0 bis 10 Gew.-% Styrol und/oder Acrylnitril.

Ein bevorzugtes Ausführungsbeispiel der Zusammensetzung eines Polybutadienlatex A ist auch dem untenstehenden experimentellen Beispielteil zu entnehmen.

Bevorzugt ist der Polybutadienlatex B hergestellt aus:
50 bis 100 Gew.-%, bevorzugt 80 bis 100 Gew.-%, insbesondere 90 bis 100 Gew.-%, Butadien; und 0 bis 50 Gew.-%, bevorzugt 0 bis 20 Gew.-%, insbesondere bevorzugt 0 bis 10 Gew.-%, von mit Butadien copolymerisierbaren Monomeren (daher Co-Monomeren), bevorzugt Monomeren ausgewählt aus der Gruppe bestehend aus Styrol, Acrylnitril, Isopren, Chloropren, alpha-Methylstyrol, $C_1$-$C_4$-Alkylstyrole, $C_1$-$C_8$-Alkylacrylate, $C_1$-$C_8$-Alkylmethacrylate, Alkylenglykoldiacrylate, Alkylenglykoldimethacrylate, Divinylbenzol und Kombinationen aus zwei oder mehr davon, insbesondere Styrol und/oder Acrylnitril.

Besonders bevorzugt ist der Polybutadienlatex B hergestellt aus:

90 bis 100 Gew.-% Butadien, und
0 bis 10 Gew.-% Styrol und/oder Acrylnitril.

Ein besonders bevorzugtes Ausführungsbeispiel der Zusammensetzung eines Polybutadienlatex B ist auch dem untenstehenden experimentellen Beispielteil zu entnehmen.

Zur Herstellung des Polybutadienlatex A und des Polybutadienlatex B wird als Saatlatex jeweils (unabhängig voneinander) mindestens ein, vorzugsweise ein, Polybutadienlatex C mit einem mittleren Teilchendurchmesser $d_{50}$ von 10 bis 220 nm, vorzugsweise 20 bis 210 nm, besonders bevorzugt 30 bis 200 nm, eingesetzt.

Das Gewichtsverhältnis der Feststoffe der Polybutadienlatices A und B zueinander kann in weiten Grenzen variiert werden. Grundsätzlich sind beliebige Gewichtsverhältnisse möglich.

Bevorzugt beträgt das Gewichtsverhältnis der Feststoffe der Polybutadienlatices A:B von 90:10 bis 10:90, bevorzugt 80:20 bis 20:80, insbesondere 60:40 bis 40:60.

In diesem Zusammenhang bezieht sich das Gewichtsverhältnis auf die Feststoffe der Polybutadienlatices. Diese können etwa gravimetrisch nach Trocknung (etwa bei 50 bis 150°C für 5 bis 60 min (z.B. in einem Umlufttrockenschrank)) ermittelt werden.

Ein bevorzugtes Ausführungsbeispiel für das Gewichtsverhältnis der Feststoffe der Polybutadienlatices A:B ist auch dem untenstehenden experimentellen Beispielteil zu entnehmen.

Bevorzugt besteht der Pfropfkautschuk P-I aus:

15 bis 60 Gew.-%, insbesondere 20 bis 50 Gew.-%, einer Pfropfhülle, erhalten durch Emulsionspolymerisation von Styrol und Acrylnitril im Styrol:Acrylnitril-Gewichtsverhältnis von 95:5 bis 50:50, wobei Styrol und/oder Acrylnitril teilweise (< 50 Gew.-%) ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus den Polybutadienlatices A und B.

Besonders bevorzugt besteht der Pfropfkautschuk P-I aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35; und
50 bis 80 Gew.-% einer Pfropfgrundstufe aus den Polybutadienlatices A und B.

Ganz besonders bevorzugt besteht der Pfropfkautschuk P-I aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35; und
50 bis 80 Gew.-% einer Pfropfgrundstufe aus den Polybutadienlatices A und B, wobei das Gewichtsverhältnis der Feststoffe der Polybutadienlatices A:B von 90:10 bis 10:90, bevorzugt 80:20 bis 20:80, besonders bevorzugt 60:40 bis 40:60, beträgt.

Ganz besonders bevorzugt besteht die Pfropfhülle des Pfropfkautschuks P-I nur aus Styrol und Acrylnitril in den vorgenannten Styrol:Acrylnitril-Gewichtsverhältnissen. Somit wird die Pfropfhülle des Pfropfkautschuks P-I erhalten durch Emulsionspolymerisation von Styrol und Acrylnitril allein, d.h. ohne teilweisen Ersatz von Styrol und Acrylnitril durch alpha-Methylstyrol, Methylmethacrylat, N-Phenylmaleinimid oder Mischungen davon.
Ein bevorzugtes Ausführungsbeispiel für die Zusammensetzung des Pfropfkautschuks P-I ist auch dem untenstehenden experimentellen Beispielteil zu entnehmen.
Der Pfropfkautschuk P-II besteht bevorzugt aus:

15 bis 60 Gew.-%, insbesondere 20 bis 50 Gew.-%, einer Pfropfhülle, erhalten durch Emulsionspolymerisation von Styrol und Acrylnitril im Styrol:Acrylnitril-Gewichtsverhältnis von 95:5 bis 50:50, wobei Styrol und/oder Acrylnitril teilweise (< 50 Gew.-%) ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus Polybutadienlatex C.

Besonders bevorzugt besteht der Pfropfkautschuk P-II aus:

20 bis 50 Gew.-% einer Pfropfhülle, erhalten durch Emulsionspolymerisation von Styrol und Acrylnitril im Styrol:Acrylnitril-Gewichtsverhältnis von 80:20 bis 65:35; und
50 bis 80 Gew.-% einer Pfropfgrundstufe aus Polybutadienlatex C.

Ganz besonders bevorzugt besteht die Pfropfhülle des Pfropfkautschuks P-II nur aus Styrol und Acrylnitril in den vorgenannten Styrol:Acrylnitril-Gewichtsverhältnissen. Somit wird die Pfropfhülle des Pfropfkautschuks P-II erhalten durch Emulsionspolymerisation von Styrol und Acrylnitril allein, d.h. ohne teilweisen Ersatz von Styrol und Acrylnitril durch alpha-Methylstyrol, Methylmethacrylat, N-Phenylmaleinimid oder Mischungen davon.
Ein besonders bevorzugtes Ausführungsbeispiel für die Zusammensetzung des Pfropfkautschuks P-II ist auch dem untenstehenden experimentellen Beispielteil zu entnehmen.
Das Gewichtsverhältnis der Pfropfkautschuke P-I und P-II zueinander in der erfindungsgemäßen Mischung P kann in weiten Grenzen variiert werden. Grundsätzlich sind beliebige Gewichtsverhältnisse möglich.
Bevorzugt ist eine erfindungsgemäße Mischung P, wobei das Gewichtsverhältnis der Pfropfkautschuke P-I:P-II 90:10 bis 10:90, besonders bevorzugt 80:20 bis 20:80, insbesondere 70:30 bis 35:65 beträgt.
Ganz besonders bevorzugt ist eine erfindungsgemäße Mischung P, wobei das Gewichtsverhältnis der Pfropfkautschuke P-I:P-II 55:45 bis 60:40 beträgt.
Auch in diesem Zusammenhang bezieht sich das Gewichtsverhältnis auf die Feststoffe der Polybutadienlatices. Diese können etwa gravimetrisch nach Trocknung (etwa bei einer Temperatur von 100 bis 200°C für 5 bis 60 min (z.B. in einem Umlufttrockenschrank)) ermittelt werden.
Ein besonders bevorzugtes Ausführungsbespiel für das Gewichtsverhältnis der Feststoffe der Pfropfkautschuke P-I:P-II ist auch dem untenstehenden experimentellen Beispielteil zu entnehmen.
Als Emulgator bei der Herstellung der Polybutadienlatices A, B und C und/oder bei der Emulsionspolymerisation zur Herstellung der Pfropfkautschuke P-I und P-II können - unabhängig voneinander - übliche anionische Emulgatoren eingesetzt werden. Bevorzugt werden als Emulgatoren Alkylsulfate, Alkylsulfonate, Aralkylsulfonate, Seifen gesättigter oder ungesättigter Fettsäuren sowie alkalisch disproportionierter oder hydrierter Abietin- oder Tallölsäuren oder Mischungen hiervon verwendet. Vorzugsweise werden Emulgatoren mit Carboxylgruppen (z. B. Salze von $C_{10}$-$C_{18}$-Fettsäuren, disproportionierte Abietinsäure, Emulgatoren gemäß DE-OS 36 39 904 und DE-OS 39 13 509) eingesetzt.
In einer weiteren bevorzugten Ausführungsform können alkalische Seifen von Natrium- und Kaliumsalzen von

disproportionierten und/oder dehydrogenierten und/oder hydrierten und/oder partiell hydrierten Harzen (Kolophonium) mit einem Gehalt an Dehydroabietinsäure von mindestens 30 Gew.-% und einem Gehalt von Abietinsäure von maximal 1 Gew.-% als Emulgatoren eingesetzt werden.

Es können weiterhin Salze, Säuren und Basen bei der Emulsionspolymerisation der Polybutadienlatices A, B und C als Additiv D eingesetzt werden, z. B. Schwefelsäure, Phosphorsäure, Lösungen von Natriumhydroxid, Kaliumhydroxid, Natrium- und Kaliumsalze von Sulfaten und Phosphaten, insbesondere kann Tetranatriumpyrophosphat eingesetzt werden.

Zusätzlich können bei der Herstellung der Polybutadienlatices A, B und C und/oder bei der Emulsionspolymerisation zur Herstellung der Pfropfkautschuke P-I und P-II Molekulargewichtsregler eingesetzt werden, vorzugsweise in Mengen von 0,01 bis 2 Gew.-%, besonders bevorzugt in Mengen von 0,05 bis 1 Gew.-% (jeweils bezogen auf die gesamte Monomer- Menge bei der Emulsionspolymerisation). Geeignete Molekulargewichtsregler sind beispielsweise Alkylmercaptane, wie n-Dodecylmercaptan, tert-Dodecylmercaptan; dimeres a-Methylstyrol und Terpinolen.

Als Initiatoren bei der Herstellung der Polybutadienlatices A, B und C können beliebige Initiatoren eingesetzt werden, die bei der gewählten Reaktionstemperatur unter Bildung von Radikalen zerfallen. Typischerweise können dafür Initiatoren eingesetzt werden, die allein thermisch zerfallen oder solche die in Gegenwart eines Redoxsystems zerfallen.

Erfindungsgemäß wird bei der Emulsionspolymerisation von Styrol und Acrylnitril (sowie gegebenenfalls alpha-Methylstyrol, Methylmethacrylat und/oder N-Phenylmaleinimid) zur Herstellung der Pfropfkautschuke P-I und P-II - unabhängig voneinander - mindestens eine organische und/oder anorganische Peroxidverbindung, bevorzugt mindestens eine anorganische Peroxidverbindung, als Initiator verwendet. Geeignete organische und/oder anorganische Peroxid-Verbindungen (umfassend mindestens eine Peroxidgruppe R-O-O-H und/oder R-O-O-R) sind z.B. Wasserstoffperoxid, Cumolhydroperoxid, tert-Butylhydroperoxid, p-Menthanhydroperoxid, Ammonium-, Kalium- und Natriumpersulfat. Insbesondere werden als Initiator anorganische Peroxid-Salze, wie Peroxodisulfate (Persulfate), Perphosphate und Perborate von Ammonium, Natrium oder Kalium, eingesetzt. Besonders bevorzugt werden als Initiatoren Natrium- und/oder Kaliumpersulfate eingesetzt.

Die Polymerisationstemperatur bei der Emulsionspolymerisation von Styrol und Acrylnitril (sowie gegebenenfalls alpha-Methylstyrol, Methylmethacrylat und/oder N-Phenylmaleinimid) zur Herstellung der Pfropfkautschuke P-I und P-II beträgt - unabhängig voneinander - im Allgemeinen 25 bis 99°C, vorzugsweise 40 bis 90°C, besonders bevorzugt 54 bis 85°C.

Vorzugsweise wird die Pfropfpolymerisation (Emulsionspolymerisation von Styrol und Acrylnitril) jedoch so durchgeführt, dass der Temperatur-Unterschied zwischen Beginn und Ende der Dosierung des Initiators mindestens 10 °C, vorzugsweise mindestens 15 °C und besonders bevorzugt mindestens 20 °C beträgt.

Weiterhin bevorzugt wird die Pfropfpolymerisation so durchgeführt, dass innerhalb von 100 bis 180 Minuten, bevorzugt innerhalb von 110 bis 150 Minuten, besonders bevorzugt innerhalb von 110 bis 140 Minuten, ganz besonders bevorzugt innerhalb von 110 bis 130 Minuten, nach Beginn der Dosierung des Initiators und der Monomeren ein Temperaturminimum durchlaufen wird, das eine Temperatur aufweist, die um mindestens 1 bis 10°C, bevorzugt 2 bis 8°C, besonders bevorzugt 4 bis 6°C, niedriger ist als die Temperatur zu Beginn der Dosierung.

Besonders bevorzugt wird die vorstehende bevorzugte Pfropfpolymerisation so durchgeführt, dass die Temperatur zu Beginn der Dosierung des Initiators und der Monomeren 58 bis 68°C, bevorzugt 59 bis 66°C, besonders bevorzugt 60 bis 64°C, beträgt; die Temperatur des Temperaturminimums, welches innerhalb von 100 bis 180 Minuten, bevorzugt innerhalb von 110 bis 150 Minuten, besonders bevorzugt innerhalb von 110 bis 140 Minuten, ganz besonders bevorzugt innerhalb von 110 bis 130 Minuten, nach Beginn der Dosierung des Initiators und der Monomeren durchlaufen wird, 54 bis 64°C, bevorzugt 55 bis 62°C, besonders bevorzugt 56 bis 58°C, beträgt, und die Temperatur bei Ende der Dosierung des Initiators 75 bis 90°C, bevorzugt 78 bis 85°C, beträgt.

Die Herstellung der Pfropfkautschuke P-I und P-II erfolgt erfindungsgemäß mittels Emulsionspolymerisation durch Vorlage der Pfropfgrundlage und kontinuierliche Dosierung der Monomeren.

Erfindungsgemäß werden die Monomere der Pfropfhülle des Pfropfkautschuks P-I, d.h. Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, separat oder als Monomer-Gemisch kontinuierlich zu den Polybutadienlatices A und B, in den gegebenen Mengen zugegeben und polymerisiert.

Erfindungsgemäß werden die Monomere der Pfropfhülle des Pfropfkautschuks P-II, d.h. Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, separat oder als Monomer-Gemisch kontinuierlich zu dem Polybutadienlatex C, in den gegebenen Mengen zugegeben und polymerisiert.

Erfindungsgemäß wird ferner - unabhängig voneinander - bei der Herstellung des Pfropfkautschuks P-I und bei der Herstellung des Pfropfkautschuks P-II die Dosierung von Styrol und Acrylnitril (wobei Styrol und/oder Acrylnitril teilweise ersetzt werden kann durch alpha-Methylstyrol, Methylmethacrylat und/oder N-Phenylmaleinimid) und die Dosierung des Initiators gleichzeitig gestartet.

Erfindungsgemäß erfolgt - unabhängig voneinander - bei der Herstellung des Pfropfkautschuks P-I und bei der

Herstellung des Pfropfkautschuks P-II die Dosierung von Styrol und Acrylnitril (wobei Styrol und/oder Acrylnitril teilweise ersetzt werden kann durch alpha-Methylstyrol, Methylmethacrylat und/oder N-Phenylmaleinimid) innerhalb von 3,50 bis 4,25 Stunden.

Erfindungsgemäß erfolgt - unabhängig voneinander - bei der Herstellung des Pfropfkautschuks P-I und bei der Herstellung des Pfropfkautschuks P-II die Dosierung der gesamten Menge des Initiators innerhalb von 4,50 bis 5,25 Stunden, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile pro Stunde, (bezogen auf die gesamte Monomermenge bei der Emulsionspolymerisation und des Feststoffes der Polybutadienlatices) und danach 0,03 bis 0,08 Gew.-Teile pro Stunde, bevorzugt 0,05 bis 0,06 Gew.-Teile pro Stunde, beträgt.

Bevorzugt erfolgt - unabhängig voneinander - bei der Herstellung des Pfropfkautschuks P-I und bei der Herstellung des Pfropfkautschuks P-II die Dosierung von Styrol und Acrylnitril (wobei Styrol und/oder Acrylnitril teilweise ersetzt werden kann durch alpha-Methylstyrol, Methylmethacrylat und/oder N-Phenylmaleinimid) innerhalb von 3,75 bis 4,25 Stunden, und

die Dosierung der gesamten Menge des Initiators innerhalb von 4,75 bis 5,25 Stunden, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile (bezogen auf die gesamte Monomermenge bei der Emulsionspolymerisation und des Feststoffes der Polybutadienlatices) pro Stunde, und danach 0,03 bis 0,08 Gew.-Teile pro Stunde, bevorzugt 0,05 bis 0,06 Gew.-Teile pro Stunde, beträgt.

Besonders bevorzugt erfolgt - unabhängig voneinander - bei der Herstellung des Pfropfkautschuks P-I und bei der Herstellung des Pfropfkautschuks P-II die Dosierung von Styrol und Acrylnitril (wobei Styrol und/oder Acrylnitril teilweise ersetzt werden kann durch alpha-Methylstyrol, Methylmethacrylat und/oder N-Phenylmaleinimid) innerhalb von 3,75 bis 4,25 Stunden, insbesondere 4,00 Stunden, und

die Dosierung der gesamten Menge des Initiators innerhalb von 4,75 bis 5,25 Stunden, insbesondere 5,00 Stunden, wobei die Dosierrate des Initiators in den ersten 20 bis 40 Minuten, bevorzugt 25 bis 35 Minuten, insbesondere 30 Minuten, 0,4 bis 0,6 Gew.-Teile (bezogen auf die gesamte Monomermenge bei der Emulsionspolymerisation und des Feststoffes der Polybutadienlatices) pro Stunde, und danach 0,05 bis 0,06 Gew.-Teile pro Stunde, beträgt.

Die Gesamtmenge des Initiators beträgt oftmals 0,1 bis 1,0 Gew.-Teile, bevorzugt 0,2 bis 0,9 Gew.-Teile, besonders bevorzugt 0,3 bis 0,7 Gew.-Teile (bezogen auf die gesamte Monomermenge bei der Emulsionspolymerisation und des Feststoffes der Polybutadienlatices).

Wie zuvor beschrieben wird dabei erfindungsgemäß als Initiator mindestens eine organische und/oder anorganische Peroxidverbindung, bevorzugt mindestens eine anorganische Peroxidverbindung, besonders bevorzugt mindestens ein anorganisches Peroxid-Salz, ganz besonders bevorzugt Natrium- und/oder Kaliumpersulfat eingesetzt.

Die Aufarbeitung der erhaltenen Dispersion des Pfropfkautschuks P-I oder P-II erfolgt nach einem dem Fachmann bekannten Verfahren. Beispielsweise erfolgt die Aufarbeitung mittels Fällung der Pfropfkautschuke und Abtrennung des Dispersionswassers. Hierfür können die Pfropfkautschuke P-I und P-II im gewünschten Verhältnis gemischt und anschließend zusammen bzw. co-gefällt werden, oder die Pfropfkautschuke P-I und P-II werden separat aufgearbeitet bzw. gefällt und dann im gewünschten Verhältnis für die erfindungsgemäße Mischung P verwendet.

Bevorzugt erfolgt die Aufarbeitung mittels Co-Fällung der Pfropfkautschuke P-I und P-II und Abtrennung des Dispersionswassers, wobei die Pfropfkautschuke P-I und P-II im gewünschten Verhältnis gemischt und anschließend cogefällt werden.

Zur Fällung können zum Beispiel beliebige koagulierende Mittel zugegeben werden. Beispielsweise kann durch eine Elektrolytlösung (z.B. eine Salzlösung, eine Säurelösung oder eine Salz- und Säurelösung) koaguliert werden.

Bevorzugte wässrige Elektrolytlösungen, sind solche enthaltend ein oder mehr Salze ausgewählt aus der Gruppe bestehend aus: Magnesiumsulfat, Kieserit, Pentahydrit, Hexahydrit, Epsomit (Bittersalz), Calciumchlorid, Natriumchlorid oder Mischungen aus zwei oder mehr daraus und/oder ein oder mehr Säuren (insbesondere Schwefelsäure und/oder Essigsäure). Beispielhaft kann mittels einer Magnesiumsulfat/Schwefelsäure-Lösung (z.B. enthaltend 1 Gew.-% Magnesiumsulfat und 0,07 Gew.-% Schwefelsäure in Wasser) koaguliert werden.

Die Abtrennung des Dispersionswassers kann in üblicher Weise erfolgen, beispielsweise durch Sieben, Filtrieren, Dekantieren oder Zentrifugieren. Nach Abtrennung des Dispersionswassers wird ein wasserfeuchtes Pfropfpolymer erhalten, welches üblicherweise einen Restwassergehalt von bis zu 60 Gew.-% aufweist. Das Pfropfpolymer kann getrocknet, teilgetrocknet oder feucht zur Herstellung der erfindungsgemäßen thermoplastischen Formmasse verwendet werden.

Optional können die erfindungsgemäß eingesetzten Pfropfkautschuke P-I und P-II bzw. die erfindungsgemäße Mischung P übliche Additive und/oder Verarbeitungshilfsmittel D enthalten. Die Additive und/oder Verarbeitungshilfsmittel D können in üblichen Mengen, bevorzugt in einer Menge von 0,2 bis 5,0, bevorzugt 0,3 bis 4,0 Gewichtsteilen, bezogen auf 100 Gewichtsteile der aus den Komponenten (I) und (II) bestehenden Mischung, eingesetzt werden.

Oftmals werden als Additive und/oder Verarbeitungshilfsmittel D Antioxidantien und/oder thermische Stabilisatoren eingesetzt.

Um die Pfropfkautschuke P-I und P-II während der Aufarbeitung vor thermischer Schädigung zu schützen, und um die Aufarbeitung sicher und gefahrlos durchführen zu können, ist es oftmals üblich Antioxidantien als Komponente (III) zuzugeben. Beispielsweise können ein oder mehrere phenolische Antioxidantien (s. dazu auch Additive D), sowie beliebige andere Substanzen, welche die thermische Beständigkeit der Pfropfkautschuke P-I und P-II erhöhen, bevorzugt nach der Emulsionspolymerisation zugesetzt werden. Typischerweise werden diese Antioxidantien, z.B. in Form einer oder mehreren Emulsionen oder Dispersionen, mit dem Pfropfkautschuk P-I und/oder P-II durch Rühren vermischt.

In der Regel werden die Antioxidantien in Mengen bis zu 4 Gewichtsteilen, bezogen auf 100 Gewichtsteile der aus den Komponenten (I) und (II) bestehenden Mischung, eingesetzt.

Ein weiterer Aspekt der vorliegenden Erfindung ist ein Verfahren zur Herstellung der erfindungsgemäßen Mischung P.

Das Verfahren ist erfindungsgemäß dadurch charakterisiert, dass - unabhängig voneinander - bei der Herstellung des Pfropfkautschuks P-I und der Herstellung des Pfropfkautschuks P-II, die Dosierung der Monomere - d.h. von Styrol und Acrylnitril, gegebenenfalls teilweise ersetzt durch alpha-Methylstyrol, Methylmethacrylat und/oder N-Phenylmaleinimid, - und die Dosierung des Initiators gleichzeitig gestartet werden; ferner die Dosierung der Monomere kontinuierlich innerhalb von 3,50 bis 4,25 Stunden, bevorzugt 3,75 bis 4,25 Stunden, insbesondere 4 Stunden, erfolgt; und die gesamte Menge des Initiators innerhalb von 4,50 bis 5,25 Stunden, bevorzugt 4,75 bis 5,25 Stunden, insbesondere 5 Stunden, dosiert wird, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile pro Stunde, (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde, bevorzugt 0,05 bis 0,06 Gew.-Teile pro Stunde beträgt.

Das erfindungsgemäße Verfahren zur Herstellung der Mischung P umfasst die folgenden Schritte:

(i) Bereitstellen von mindestens einem Polybutadienlatex C mit einem mittleren Teilchendurchmesser $d_{50}$ von 10 bis 220 nm;

(ii) Herstellen von mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm durch Saatpolymerisation auf dem Polybutadienlatex C aus Schritt (i);

(iii) Herstellen eines Pfropfkautschuks P-I durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart der Polybutadienlatices A und B aus Schritt (ii);

(iv) Herstellen eines Pfropfkautschuks P-II durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des Polybutadienlatex C aus Schritt (i);

wobei in den Schritten (iii) und (iv) - unabhängig voneinander -

- die Dosierung der Monomere - d.h. von Styrol und Acrylnitril, gegebenenfalls ersetzt durch alpha-Methylstyrol, Methylmethacrylat und/oder N-Phenylmaleinimid - und die Dosierung des Initiators gleichzeitig gestartet werden;
- die Dosierung der Monomere kontinuierlich innerhalb von 3,50 bis 4,25 Stunden erfolgt;
- die gesamte Menge des Initiators innerhalb von 4,50 bis 5,25 Stunden dosiert wird, wobei die Dosierrate des Initiators in den ersten 20 bis 40 Minuten 0,25 bis 0,75 Gew.-Teile pro Stunde, bevorzugt 0,4 bis 0,6 Gew.-Teile pro Stunde, (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde, bevorzugt 0,05 bis 0,06 Gew.-Teile pro Stunde, beträgt;

(v) gegebenenfalls Mischen der Emulsionen enthaltend die Pfropfkautschuke P-I und P-II aus Schritten (iii) und (iv);

(vi) Aufarbeitung der Pfropfkautschuke P-I und P-II aus den Schritten (iii) und (iv) oder Schritt (v), und

(vii) falls Schritt (v) nicht vorhanden, Mischen der Pfropfkautschuke P-I und P-II aus Schritt (vi).

Bevorzugt ist ein erfindungsgemäßes Verfahren zur Herstellung der Mischung P wie zuvor beschrieben, wobei in den Schritten (iii) und (iv) - unabhängig voneinander -

- die Dosierung der Monomere kontinuierlich innerhalb von 3,75 bis 4,25 Stunden, insbesondere 4 Stunden, erfolgt;
- die gesamte Menge des Initiators innerhalb von 4,75 bis 5,25 Stunden, insbesondere 5 Stunden, dosiert wird, wobei

die Dosierrate des Initiators in den ersten 25 bis 35 Minuten, insbesondere 30 Minuten, 0,25 bis 0,75 Gew.-Teile pro Stunde beträgt, und danach die Dosierrate des Initiators 0,03 bis 0,08 Gew.-Teile pro Stunde beträgt.

Besonders bevorzugt ist ein erfindungsgemäßes Verfahren zur Herstellung der Mischung P wie zuvor beschrieben, wobei in den Schritten (iii) und (iv) - unabhängig voneinander -

- die Dosierung der Monomere kontinuierlich innerhalb von 3,75 bis 4,25 Stunden, insbesondere 4 Stunden, erfolgt;
- die gesamte Menge des Initiators innerhalb von 4,75 bis 5,25 Stunden, insbesondere 5 Stunden, dosiert wird, wobei die Dosierrate des Initiators in den ersten 25 bis 35 Minuten, insbesondere 30 Minuten, 0,4 bis 0,6 Gew.-Teile pro Stunde beträgt, und danach die Dosierrate des Initiators 0,05 bis 0,06 Gew.-Teile pro Stunde beträgt.

Besonders bevorzugt ist ein erfindungsgemäßes Verfahren, wobei in den Schritten (iii) und (iv) - unabhängig voneinander - mindestens ein anorganisches Peroxid-Salz ausgewählt aus der Gruppe bestehend aus Peroxodisulfat (Persulfat), Perphosphat und Perborat von Ammonium, Natrium und/oder Kalium, bevorzugt Natrium- und/oder Kaliumpersulfat eingesetzt wird.

Oftmals umfassen die Schritte (iii) und (iv) des erfindungsgemäßen Verfahrens zur Herstellung der Mischung P wie zuvor beschrieben zusätzlich eine Nachreaktionszeit von 1,5 bis 2,5 Stunden, bevorzugt 2 Stunden, nach Ende aller Dosierungen.

Bevorzugt beträgt bei der Emulsionspolymerisation in den Schritten (iii) und (iv) des erfindungsgemäßen Verfahrens zur Herstellung der Mischung P, die Temperatur 40 bis 90 °C, insbesondere 55 bis 85°C. Weiterhin bevorzugt beträgt bei der Emulsionspolymerisation in den Schritten (iii) und (iv) des erfindungsgemäßen Verfahrens zur Herstellung der Mischung P der Temperatur-Unterschied zwischen Beginn und Ende der Reaktion mindestens 10 °C, vorzugsweise mindestens 15 °C und besonders bevorzugt mindestens 20 °C.

Bevorzugt ist ein erfindungsgemäßen Verfahren zur Herstellung der Mischung P, worin Schritt (v) vorhanden ist, d.h. die Emulsionen enthaltend die Pfropfkautschuke P-I und P-II aus den Schritten (iii) und (iv) werden gemischt.

Bevorzugt erfolgt die Aufarbeitung gemäß Schritt (vi) des erfindungsgemäßen Verfahrens zur Herstellung der Mischung P durch

(vi-1) Fällen (gegebenenfalls Co-Fällen) der Pfropfkautschuke P-I und P-II aus der diese Pfropfkautschuke umfassenden Emulsion aus den Schritten (iii) und (iv) oder Schritt (v);
(vi-2) Entwässern der gefällten Pfropfkautschuke P-I und P-II aus Schritt (vi-1) durch Filtration oder Zentrifugation; und
(vi-3) gegebenenfalls Trocknen der entwässerten Pfropfkautschuke P-I und P-II aus Schritt (vi-2).

Der optionale Schritt (vi-3) umfasst das Trocknen der entwässerten Pfropfkautschuke P-I und P-II aus Schritt (vi-2).

In einer bevorzugten Ausführungsform umfasst das erfindungsgemäße Verfahren den Schritt (vi-3), bevorzugt Schritt (vi-3'):
Trocknen der entwässerten Pfropfkautschuke P-I und P-II aus Schritt (vi-2), wobei ein Pfropfkautschuk-Pulver erhalten wird, das eine Restfeuchte von kleiner oder gleich 5 Gew.-% aufweist.

Bevorzugt erfolgt das Trocknen der wasserfeuchten Pfropfkautschuke mit einer Restfeuchte von kleiner oder gleich 25 Gew.-% unter Verwendung eines Trocknungsgases, wobei der Pfropfkautschuk in dem Trocknungsgas bewegt wird (z.B. von dem strömenden Trocknungsgas mitgerissen wird) und das Trocknungsgas eine Temperatur im Bereich von 50 bis 160 °C, bevorzugt von 55 bis 155 °C, besonders bevorzugt von 60 bis 150 °C, aufweist. Bevorzugt wird als Trocknungsgas Luft, Stickstoff oder beliebige Mischungen hiervon verwendet.

In einer bevorzugten Ausführungsform erfolgt das Trocknen der entwässerten Pfropfkautschuke P-I und P-II in Schritt (vi-3) unter Verwendung eines Fließbetttrockners (Wirbelschichttrockner) und/oder eines Stromtrockners (Flashtrockner). Insbesondere erfolgt das Trocknen in Schritt (vi-3) wie in WO 2017/093468 A1 beschrieben.

Fließbetttrockner (Wirbelschichttrockner) und Stromtrockner (Flashtrockner) sind dem Fachmann bekannt. Insbesondere handelt es sich um Trocknungsvorrichtungen für partikelförmige, rieselfähige Materialien, wie sie in Krischer/Kröll, Trocknungstechnik, Zweiter Band, Trockner und Trocknungsverfahren (Springer-Verlag, 1959) beschrieben werden.

Insbesondere wird das Trocknen in Schritt (vi-3) unter Verwendung eines Fließbetttrockners durchgeführt, wobei das Trocknungsgas eine Temperatur im Bereich von 50 bis 100 °C, bevorzugt 55 bis 90 °C, besonders bevorzugt 60 bis 85 °C, aufweist und die mittlere Verweilzeit der Pfropfkautschuke P-I und P-II im Fließbetttrockner 1 bis 60 min, bevorzugt 5 bis 50 min, besonders bevorzugt 10 bis 40 min, beträgt.

Insbesondere wird das Trocknen in Schritt (vi-3) unter Verwendung eines Stromtrockners durchgeführt, wobei das Trocknungsgas eine Temperatur im Bereich von 100 bis 160 °C, bevorzugt 110 bis 155 °C, besonders bevorzugt 130

bis 150 °C, aufweist und die mittlere Verweilzeit der Pfropfkautschuke P-I und P-II im Stromtrockner typischerweise 1 bis 300 Sekunden, bevorzugt 1 bis 120 Sekunden, besonders bevorzugt 5 bis 60 Sekunden, beträgt.

In einer bevorzugten Ausführungsform weist das getrocknete Pfropfkautschuk-Pulver erhalten in Schritt (vi-3) eine Restfeuchte im Bereich von 0,01 bis 5 Gew.-%, bevorzugt 0,05 bis 2 Gew.-%, insbesondere bevorzugt 0,1 bis 1 Gew.-%, auf.

Besonders bevorzugt ist ein erfindungsgemäßes Verfahren zur Herstellung der Mischung P, worin Schritt (v) vorhanden ist, und die Aufarbeitung gemäß Schritt (vi) erfolgt durch

(vi-1) Co-Fällen der Pfropfkautschuke P-I und P-II aus der diese Pfropfkautschuke umfassenden Emulsion aus Schritt (v);
(vi-2) Abtrennen der gefällten Pfropfkautschuke P-I und P-II (Mischung P) aus Schritt (vi-1) durch Filtration oder Zentrifugation; und
(vi-3) gegebenenfalls Trocknen der abgetrennten Pfropfkautschuke P-I und P-II (Mischung P) aus Schritt (vi-2).

Gemäß einer alternativen bevorzugten Ausführungsform können die nach Schritt (vi-2) erhaltenen feuchten, entwässerten Pfropfkautschuke P-I und P-II mit einer Schmelze aus thermoplastischen Komponenten, die ein kautschukfreies Copolymer P-III und optional nicht aus Vinylaromaten aufgebaute thermoplastische Polymere T und/oder Additive und/oder Verarbeitungshilfsmittel D', enthält, vermischt werden (beispielsweise in einem Knetreaktor) (s. z.B. EP-A 867 463).

Auf die zuvor angeführten Details zur Emulsionspolymerisation gemäß den Schritten (ii), (iii) und (iv), zur Aufarbeitung, insbesondere der Fällung und Entwässerung, der Pfropfkautschuke P-I und P-II gemäß Schritt (vi) bzw. den Schritten (vi-1), (vi-2) und (vi-3) des erfindungsgemäßen Verfahrens zur Herstellung der Mischung P wird verwiesen.

Ein weiterer Gegenstand der Erfindung ist eine durch das erfindungsgemäße Verfahren erhaltene Mischung P.

Thermoplastische Formmasse F

Ein weiterer Aspekt der Erfindung ist eine thermoplastische Formmasse F enthaltend (oder bestehend aus) die Komponenten (a) bis (d):

(a) erfindungsgemäße Mischung P enthaltend (oder bestehend aus):

(I) mindestens einen Pfropfkautschuk P-I, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart von:

mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm,
wobei die Polybutadienlatices A und B mittels Saatpolymerisation ausgehend von mindestens einem, vorzugsweise einem, Polybutadienlatex C (als Saatlatex) mit einem mittleren Teilchendurchmesser $d_{50}$ von 10 bis 220 nm erhalten wurden;

(II) mindestens einen Pfropfkautschuk P-II, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise (< 50 Gew.-%) ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des mindestens einen Polybutadienlatex C mit einem mittleren Teilchendurchmesser $d_{50}$ von 10 bis 220 nm; und
(III) optional ein oder mehrere Additive und/oder Verarbeitungshilfsmittel D;
dadurch gekennzeichnet, dass - unabhängig voneinander - bei der Herstellung des Pfropfkautschuks P-I und bei der Herstellung des Pfropfkautschuks P-II,

- die Dosierung der Monomere - d.h. Styrol und Acrylnitril, gegebenenfalls teilweise ersetzt durch alpha-Methylstyrol, Methylmethacrylat und/oder N-Phenylmaleinimid, - und die Dosierung des Initiators gleichzeitig gestartet werden;
- die Dosierung der Monomere kontinuierlich innerhalb von 3,50 bis 4,25 Stunden, bevorzugt 3,75 bis 4,25 Stunden, insbesondere 4 Stunden, erfolgt;

- die gesamte Menge des Initiators innerhalb von 4,50 bis 5,25 h, bevorzugt 4,75 bis 5,25 h, insbesondere 5 h, dosiert wird, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile pro Stunde (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde, bevorzugt 0,05 bis 0,06 Gew.-Teile pro Stunde, beträgt;

(b) mindestens eine kautschukfreie Copolymer-Matrix P-III aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol und/oder Acrylnitril durch Maleinsäureanhydrid;

(c) optional ein oder mehrere, nicht aus Vinylmonomeren aufgebaute thermoplastische Polymere T; und

(d) optional ein oder mehrere Additive und/oder Verarbeitungshilfsmittel D'.

Bevorzugt besteht die thermoplastische Formmasse F aus den vorstehend genannten Komponenten (a) und (b), sowie optional (c) und/oder (d).

Komponente (a) ist die erfindungsgemäße Mischung P wie zuvor beschrieben.

Kautschukfreie Copolymer-Matrix P-III

Die mindestens eine kautschukfreie Matrix-Komponente P-III (Komponente (b)) ist mindestens ein Copolymer aus Styrol und Acrylnitril im Gewichtsverhältnis Styrol:Acrylnitril von 95:5 bis 50:50, wobei Styrol teilweise (< 50 Gew.-%) ersetzt werden kann durch alpha-Methylstyrol und/oder Acrylnitril durch Maleinsäureanhydrid.

Bevorzugt ist die kautschukfreie Matrix-Komponente P-III mindestens ein Copolymer aus Styrol und Acrylnitril im Gewichtsverhältnis Styrol:Acrylnitril von 65:35 bis 80:20, wobei Styrol teilweise ersetzt werden kann durch alpha-Methylstyrol und/oder Acrylnitril durch Maleinsäureanhydrid.

Besonders bevorzugt ist die kautschukfreie Matrix-Komponente P-III mindestens ein Copolymer aus Styrol und Acrylnitril im Gewichtsverhältnis Styrol:Acrylnitril von 68:32 bis 77:23, wobei Styrol teilweise ersetzt werden kann durch alpha-Methylstyrol und/oder und Acrylnitril durch Maleinsäureanhydrid.

Ganz besonders bevorzugt ist die kautschukfreie Matrix-Komponente P-III mindestens ein Copolymer aus Styrol und Acrylnitril in den vorgenannten Styrol:Acrylnitril -Gewichtsverhältnissen, wobei das Copolymer ein Copolymer aus Styrol und Acrylnitril allein ist (d.h. kein Ersatz durch weitere Comonomere).

Ebenso ganz besonders bevorzugt ist die kautschukfreie Matrix-Komponente P-III mindestens ein Copolymer (bzw. Terpolymer) von Styrol, Acrylnitril und Maleinsäureanhydrid, bevorzugt im Gewichtsverhältnis Styrol:Acrylnitril:Maleinsäureanhydrid von 65:34:1 bis 70:25:5.

Weiterhin ganz besonders bevorzugt ist die kautschukfreie Matrix-Komponente P-III eine Mischung von mindestens einem Copolymer aus Styrol und Acrylnitril allein in den vorgenannten Styrol:Acrylnitril Gewichtsverhältnissen und mindestens einem Copolymer (bzw. Terpolymer) von Styrol, Acrylnitril und Maleinsäureanhydrid im Gewichtsverhältnis Styrol:Acrylnitril:Maleinsäureanhydrid von 65:34:1 bis 70:25:5.

Die mindestens eine kautschukfreie Matrix-Komponente P-III besitzt vorzugsweise eine mittlere Molmasse Mw (Gewichtsmittel, ermittelt durch Lichtstreuung oder Sedimentation) zwischen 15.000 und 200.000 und/oder eine Grenzviskosität [$\eta$] von 20 bis 110 ml/g (gemessen in Dimethylformamid bei 25°C).

Kautschukfreie Matrix-Komponenten P-III sind bekannt und lassen sich durch radikalische Polymerisation, insbesondere durch Emulsions-, Suspensions-, Lösungs- oder Massepolymerisation herstellen. Einzelheiten zur Herstellung derartiger kautschukfreier Matrix-Komponenten sind beispielsweise in DE-A 24 20 358, DE-A 27 24 360 und der DE-A 1 971 3509 beschrieben. Die Initiierung kann sowohl rein thermisch erfolgen als auch durch Zusatz von Initiatoren, insbesondere Peroxiden. Durch Masse- bzw. Lösungspolymerisation hergestellte Matrix-Komponenten P-III sind besonders bevorzugt.

Ein bevorzugtes Ausführungsbeispiel eines kautschukfreien Copolymers P-III ist auch dem untenstehenden experimentellen Beispielteil zu entnehmen.

Thermoplastische Polymere T

Außer aus Vinylmonomeren aufgebauten thermoplastischen Komponenten - wie Komponente (b) - ist auch die Verwendung von Polykondensaten, wie beispielsweise aromatischen Polycarbonaten, aromatischen Polyestercarbonaten, Polyestern, Polyamiden als kautschukfreie Copolymer-Matrix in der Formmasse möglich. Diese werden dann als thermoplastische Polymere T (optionale Komponente (c)) eingesetzt.

Zahlreiche geeignete thermoplastische Polycarbonate und Polyestercarbonate sind bekannt (vgl. beispielsweise DE-A 14 95 626, DE-A 22 32 877, DE-A 27 03 376, DE-A 27 14 544, DE-A 30 00 610, DE-A 38 32396, sowie insbesondere DE-A 100 08 420 und WO 2012/022710.

Erfindungsgemäß geeignete aromatische Polycarbonate und/oder aromatische Polyestercarbonate eingesetzt als thermoplastische Polymere T sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

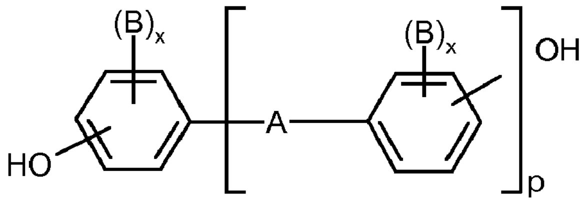

(I),

wobei

A

eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

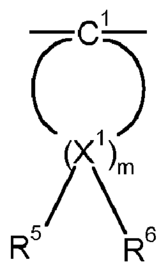

(II)

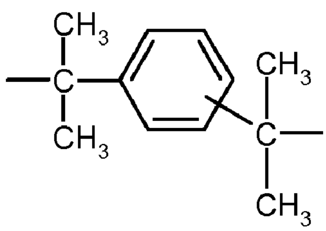

(III)

B jeweils $C_1$ bis $C_{12}$-Alkyl, vorzugsweise Methyl, Halogen, vorzugsweise Chlor und/oder Brom

X jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethyl-butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 mol-%, und 10 mol-%, bezogen auf die Molsumme der jeweils eingesetzten Diphenole.

Die thermoplastischen, aromatischen Polycarbonate haben mittlere gewichtsmittlere Molmassen ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung von Copolycarbonaten als thermoplastisches Polymer T können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934 ).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Außerdem sind als thermoplastische Polymere T (Komponente (c)) Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethyleyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diamino-dicyclohexylmethan und ε-Caprolactam; oder aus Isophthalsäure, 3,3'-Dimethyl-4,4'-diaminodicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus 70 bis 99 Mol-% des 4,4'-Diamino-Isomeren, 1 bis 30 Mol-% des 2,4'-Diamino-Isomeren, 0 bis 2 Mol-% des 2,2'-Diamino-Isomeren und gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine Viskositätszahl (VZ, bestimmt nach ISO 307 an 0,5 gew.-%iger Lösung in konzentrierter Schwefelsäure (96 Gew.-% $H_2SO_4$ bei 25°C) von 90-150 ml/g, besonders bevorzugt von 105-135 ml/g auf.

Additive und/oder Verarbeitungshilfsmittel D'

Als Komponente (d) können den erfindungsgemäßen Formmassen bei der Herstellung, Aufarbeitung, Weiterverarbeitung und Endverformung die erforderlichen bzw. zweckmäßigen Additive und/oder Verarbeitungshilfsmittel D' zugesetzt werden.

Beispiele für Additive und/oder Verarbeitungshilfsmittel D' sind Schmierstoffe, Trennmittel, Wachse, Pigmente, Farbstoffe, Flammschutzmittel, Antioxidantien, UV-Stabilisatoren, faser- oder pulverförmige Füllstoffe, faser- oder pulverförmige Verstärkungsmittel, sowie Antistatika und deren Mischungen.

Beispiele für geeignete Schmier- und Trennmittel sind Stearinsäuren, Stearylalkohol, Stearinsäureester, Stearamide sowie Silikonöle, Montanwachse und solche auf Polyethylen- oder Polypropylenbasis. Diese Schmierstoffe und Formtrennmittel werden im Allgemeinen in Mengen von bis zu 4 Gewichtsteilen, vorzugsweise bis zu 3 Gewichtsteilen, bezogen auf 100 Gewichtsteile der aus den Komponenten (a) und (b), sowie gegebenenfalls (c), bestehenden Formmasse, verwendet.

Beispiele für Pigmente sind Titandioxid, Phthalocyanine, Ultramarinblau, Eisenoxide und Ruß sowie die gesamte Klasse der organischen und anorganischen Pigmente.

Im Sinne der vorliegenden Erfindung sind Farbstoffe alle Farbstoffe, die zur transparenten, halbtransparenten oder undurchsichtigen Einfärbung von Polymeren verwendet werden können, insbesondere solche Farbstoffe, die zum Einfärben von Styrol-Copolymeren geeignet sind. Derartige Farbstoffe sind dem Fachmann bekannt. Diese Pigmente und Farbstoffe werden im Allgemeinen in Mengen bis zu 20 Gewichtsteilen, vorzugsweise bis zu 10 Gewichtsteilen, bezogen auf 100 Gewichtsteile der aus den Komponenten (a) und (b), sowie gegebenenfalls (c) bestehenden Formmasse, verwendet.

Beispiele für geeignete Flammschutzmittel sind Antimonoxide wie $Sb_2O_3$ und/oder halogenierte organische Verbindungen.

Besonders geeignete Antioxidantien sind sterisch gehinderte ein- oder mehrkernige phenolische Antioxidantien, die verschiedene Substituenten aufweisen können und auch eine Brückenbildung durch Substituenten aufweisen. Dazu gehören sowohl monomere als auch oligomere Verbindungen, die aus zwei oder mehreren phenolischen Bausteinen aufgebaut sein können. Es ist auch möglich, Hydrochinone oder Hydrochinonanaloge oder substituierte Verbindungen oder andere Antioxidantien auf Basis von Tocopherolen oder deren Derivaten zu verwenden. Es ist auch möglich, Mischungen aus verschiedenen Antioxidantien zu verwenden. In der Regel werden die Antioxidantien in Mengen bis zu 4 Gewichtsteilen, bezogen auf 100 Gewichtsteile der aus den Komponenten (a) und (b), sowie gegebenenfalls (c) bestehenden Formmasse, eingesetzt. Grundsätzlich können alle handelsüblichen oder für Styrol-Copolymere geeigneten Verbindungen verwendet werden.

Zusammen mit den oben als Beispiel genannten phenolischen Antioxidantien können so genannte Costabilizer, insbesondere phosphor- oder schwefelhaltige Costabilizer, gleichzeitig eingesetzt werden. Diese P- oder S-haltigen Kostenstabilisatoren sind dem Facharbeiter bekannt und im Handel erhältlich.

Beispiele für geeignete Antioxidantien sind:

Ester von 3,5-di-tert.-Butyl-4-hydroxyphenylessigsäure mit ein- oder mehrwertigen Alkoholen, wie z.B. und vorzugsweise Dekanol, Undecanol, Dodecanol, Tridecanol, Tetradecanol, Pentadecanol, Hexadecanol, Octadecanol, 1,6-Hexandiol, Neopentylglykol, 1,9-Nonandiol, Ethylenglykol, Diethylenglykol, Triethylenglykol, Pentaerythritol, 3-Thiaundecanol, 3-Thiapentadecanol, Trimethylolpropan;

Ester von β-(3,5-di-tert.-butyl-4-hydroxyphenyl)-propionsäure mit den vorgenannten ein- oder mehrwertigen Alkoholen; und

Ester von β-(5-tert.-butyl-4-hydroxy-3-methylphenyl)-propionsäure mit ein- oder mehrwertigen Alkoholen, mit den vorgenannten ein- oder mehrwertigen Alkoholen;

Ester von β-(3,5-Dicyclohexyl-4-hydroxyphenyl)-propionsäure mit den vorgenannten ein- oder mehrwertigen Alkoholen.

Bevorzugte Antioxidantien sind 3,3'-Thiodipropionsäure-Dioctadecylester (CAS-Nr. 693-36-7), Octadecyl-3-(3,5-di-tert.butyl-4-hydroxyphenyl)-propionat (CAS-Nr. 2082-79-3) und das butylierte Reaktionsprodukt aus p-Kresol und Dicyclopentadien (CAS-Nr. 68610-51-5).

Beispiele für geeignete Stabilisatoren gegen die Wirkung von Licht sind verschiedene substituierte Resorzinole, Salicylate, Benzotriazole, Benzophenone und HALS (Lichtschutzmittel mit gehindertem Amin), z.B. solche, die als Tinuvin im Handel erhältlich sind.

Bevorzugt werden Tinuvin 770 DF 1, bis(2,2,6,6,6,-Tetramethyl-4-piperidyl)sebaceat (CAS-Nr. 52829-07-9), Tinuvin P, 2-(2H-Benzotriazol-2-yl)-p-Kresol (CAS-Nr. 2H). 2440-22-4), Cyasorb UV 3853, 2,2,6,6,6-Tetramethyl-4-piperidinylstearat (CAS-Nr. 167078-06-0), Hostavin N 845 (CAS-Nr. 86403-32-9) und Mischungen davon.

Diese Stabilisatoren werden im Allgemeinen in Mengen bis zu 4 Gewichtsteilen, vorzugsweise 3 Gewichtsteilen, bezogen auf 100 Gewichtsteile der aus den Komponenten (a) und (b), sowie gegebenenfalls (c) bestehenden Formmasse, verwendet.

Beispiele für faserige oder pulverförmige Füllstoffe sind Kohlefasern und Glasfasern in Form von Glasgeweben, Glasmatten oder Glasseidenrovings, Hackglas, Glasperlen sowie Wollastonit, insbesondere Glasfasern. Bei der Verwendung von Glasfasern können diese mit einer Größe und einem Haftvermittler versehen worden sein, um die Kompatibilität mit den Komponenten der Mischung zu verbessern. Die eingearbeiteten Glasfasern können entweder in Form von kurzen Glasfasern oder in Form von kontinuierlichen Strängen (Rovings) vorliegen. Diese Füllstoffe werden in der Regel in Mengen von bis zu 20 Gewichtsteilen, vorzugsweise bis zu 10 Gewichtsteilen, bezogen auf 100 Gewichtsteile der aus den Komponenten (a) und (b), sowie gegebenenfalls (c) bestehenden Formmasse, verwendet.

Wenn nicht ausdrücklich erwähnt, werden die einzelnen Additive und/oder Verarbeitungshilfsmittel D' in den für den Fachmann üblichen Einsatzmengen verwendet, so dass es in diesem Zusammenhang unnötig ist, weitere Angaben zu machen.

Bevorzugt enthält die erfindungsgemäße thermoplastische Formmasse F (oder besteht die thermoplastische Formmasse F aus) Komponenten (a) bis (d):

(a) erfindungsgemäße Mischung P wie zuvor beschrieben enthaltend (oder bestehend aus):

(I) mindestens einen Pfropfkautschuk P-I, erhalten durch Emulsionspolymerisation von Styrol und Acrylnitril im

Gewichtsverhältnis Styrol:Acrylnitril von 80:20 bis 65:35 unter Verwendung mindestens einer anorganischen Peroxidverbindung als Initiator, in Gegenwart von:

mindestens einem Polybutadienlatex A mit einem mittleren Teilchendurchmesser $d_{50}$ von 250 bis 310 nm und einem Gelgehalt von 45 bis 70 Gew.-%, und
mindestens einem Polybutadienlatex B mit einem mittleren Teilchendurchmesser $d_{50}$ von 360 bis 460 nm und einem Gelgehalt von 55 bis 90 Gew.-%,
wobei die Polybutadienlatices A und B mittels Saatpolymerisation ausgehend von einem mindestens einem, vorzugsweise einem, Polybutadienlatex C mit einem mittleren Teilchendurchmesser $d_{50}$ von 30 bis 200 nm und einem Gelgehalt von 50 bis 92 Gew.-% (als Saatlatex) erhalten wurden,
wobei das Gewichtsverhältnis der Feststoffe der Polybutadienlatices A:B von 90:10 bis 10:90, bevorzugt 80:20 bis 20:80, besonders bevorzugt 60:40 bis 40:60, beträgt;

(II) mindestens einen Pfropfkautschuk P-II, erhalten durch Emulsionspolymerisation von Styrol und Acrylnitril im Gewichtsverhältnis Styrol:Acrylnitril von 80:20 bis 65:35 unter Verwendung mindestens einer anorganischen Peroxidverbindung als Initiator, in Gegenwart des mindestens einen Polybutadienlatex C mit einem mittleren Teilchendurchmesser $d_{50}$ von 30 bis 200 nm und einem Gelgehalt von 50 bis 92 Gew.-%; und
(III) optional ein oder mehrere Additive und/oder Verarbeitungshilfsmittel D;
worin das Gewichtsverhältnis der Pfropfkautschuke P-I:P-II 70:30 bis 35:65, bevorzugt 55:45 bis 60:40, beträgt.

(b) mindestens eine kautschukfreie Copolymer-Matrix P-III aus Styrol und Acrylnitril im Gewichtsverhältnis Styrol:Acrylnitril von 80:20 bis 65:35; wobei Styrol teilweise (< 50 Gew.-%) ersetzt werden kann durch alpha-Methylstyrol und/oder Acrylnitril durch Maleinsäureanhydrid;

(c) optional ein oder mehrere, nicht aus Vinylmonomeren aufgebaute thermoplastische Polymere T; und

(d) optional ein oder mehrere Additive und/oder Verarbeitungshilfsmittel D'.

Die thermoplastische Formmasse F kann beliebige Mengen an Komponente (a) - der erfindungsgemäßen Mischung P enthaltend die Pfropfkautschuke P-I und P-II - umfassen. Bevorzugt umfasst die thermoplastische Formmasse F 1 bis 60 Gew.-Teile, insbesondere 5 bis 50 Gew.-Teile, der Mischung P. Hierbei sind die Gew.-Teile bezogen auf 100 Gew.-Teile der Komponenten (a) und (b) (d.h. der Gesamtmasse aus der Mischung P und dem kautschukfreien Copolymer P-III).
Die thermoplastische Formmasse F kann beliebige Mengen an Komponente (b) - dem kautschukfreiem Copolymer P-III - umfassen. Bevorzugt umfasst die thermoplastische Formmasse F 40 bis 99 Gew.-Teile, insbesondere 50 bis 95 Gew.-Teile, an kautschukfreiem Copolymer P-III. Hierbei sind die Gew.-Teile bezogen auf 100 Gew.-Teile der Komponenten (a) und (b) (d.h. der Gesamtmasse aus der Mischung P und dem kautschukfreien Copolymer P-III).
Besonders bevorzugt umfasst die thermoplastische Formmasse F 1 bis 60 Gew.-Teile, insbesondere 5 bis 50 Gew.-Teile, der Mischung P und 40 bis 99 Gew.-Teile, insbesondere 50 bis 95 Gew.-Teile, an kautschukfreiem Copolymer P-III. Hierbei sind die Gew.-Teile bezogen auf 100 Gew.-Teile der Komponenten (a) und (b) (d.h. der Gesamtmasse aus der Mischung P und dem kautschukfreien Copolymer P-III).
Die thermoplastische Formmasse F kann zudem optional beliebige Mengen an nicht aus Vinylmonomeren aufgebauten thermoplastischen Polymeren T umfassen. Bevorzugt umfasst die thermoplastische Formmasse 0 bis 1000 Gew.-Teile, bevorzugt 0 bis 700 Gew.-Teile, besonders bevorzugt 0 bis 500 Gew.-Teile, insbesondere 0 bis 100 Gew.-Teile, nicht aus Vinylmonomeren aufgebauten thermoplastischen Polymeren T. Hierbei sind die Gew.-Teile bezogen auf 100 Gew.-Teile der Komponenten (a) und (b) (d.h. der Gesamtmasse aus der Mischung P und dem kautschukfreien Copolymer P-III).
Die thermoplastische Formmasse F kann zudem optional beliebige Mengen an Additiven und/oder Verarbeitungshilfsmitteln D' umfassen. Oftmals umfasst die thermoplastische Formmasse F 0 bis 10 Gew.-Teile, bevorzugt 0 bis 7,5 Gew.-Teile, besonders bevorzugt 0 bis 5 Gew.-Teile, an Additiven und/oder Verarbeitungshilfsmitteln D'. Hierbei sind die Gew.-Teile bezogen auf 100 Gew.-Teile der Komponenten (a) und (b) (d.h. der Gesamtmasse aus der Mischung P und dem kautschukfreien Copolymer P-III).
Gemäß einer Ausführungsform umfasst die erfindungsgemäße thermoplastische Formmasse F oder besteht die thermoplastische Formmasse F aus:

(a) 1 bis 60 Gew.-Teile(n), insbesondere 5 bis 50 Gew.-Teile(n), der erfindungsgemäßen Mischung P enthaltend Pfropfkautschuke P-I und P-II;

(b) 40 bis 99 Gew.-Teile(n), insbesondere 50 bis 95 Gew.-Teile(n), an kautschukfreiem Copolymer P-III;

(c) 0 bis 250 Gew.-Teile(n), bevorzugt 0 bis 200 Gew.-Teile(n), stärker bevorzugt 0 bis 150 Gew.-Teile(n), insbesondere 0 bis 100 Gew.-Teile(n), an nicht aus Vinylmonomeren aufgebauten thermoplastischen Polymeren T; und

(d) 0 bis 50 Gew.-Teile(n), bevorzugt 0 bis 10 Gew.-Teile, besonders 0 bis 5 Gew.-Teile, an Additiven D'.

Bevorzugt enthält die erfindungsgemäße thermoplastische Formmasse F 4,5 bis 57,5 Gew.-%, insbesondere 22,5 bis 45 Gew.-%, der Komponente (a) (erfindungsgemäße Mischung P enthaltend Pfropfkautschuke P-I und P-II). Bei der vorgenannten Formmasse beträgt das Gewichtsverhältnis der Pfropfkautschuke P-I:P-II in der Mischung P bevorzugt 90:10 bis 10:90, besonders bevorzugt 80:20 bis 20:80, insbesondere 70:30 bis 35:65.
Vorstehend und im Folgenden bezieht sich die Angabe in Gewichtsprozent auf die Formmasse F enthaltend (bevorzugt bestehend aus) die Komponenten (a), (b), (c) und (d), deren Summe 100 Gew.-% ergibt.
Bevorzugt, falls Komponente (c) (thermoplastische Polymere T) nicht oder zu nicht mehr als 10 Gew.-% vorhanden ist, enthält die erfindungsgemäße thermoplastische Formmasse F 22,5 bis 95,5 Gew.-%, insbesondere 55,5 bis 77,5 Gew.-%, der mindestens einen kautschukfreien Copolymer-Matrix P-III (Komponente (b)).
Bevorzugt, falls Komponente (c) zu mehr als 10 Gew.-% vorhanden ist, enthält die erfindungsgemäße thermoplastische Formmasse F 15 bis 40 Gew.-%, insbesondere 15 bis 35 Gew.-%, der mindestens einen kautschukfreien Copolymer-Matrix P-III (Komponente (b)).
Gemäß einer bevorzugten Ausführungsform enthält die thermoplastische Formmasse F nicht mehr als 10 Gew.-%, insbesondere (weitgehend) keine, nicht aus Vinylmonomeren aufgebauten thermoplastischen Polymere T (Komponente (c)).
Gemäß einer weiteren bevorzugten Ausführungsform enthält die thermoplastische Formmasse F 30 bis 55 Gew.-%, insbesondere 35 bis 50 Gew.-%, nicht aus Vinylmonomeren aufgebauten thermoplastischen Polymere T (Komponente (c)).
Bevorzugt enthält die thermoplastische Formmasse F nicht mehr als 10 Gew.-%, insbesondere nicht mehr als 5 Gew.-%, oder (weitgehend) keine, Additive und/oder Verarbeitungshilfsmittel D'. Falls Additive und/oder Verarbeitungshilfsmittel D' vorhanden sind, beträgt deren Anteil mindestens 0,01 Gew.-%.
Gemäß einer bevorzugten Ausführungsform enthält die erfindungsgemäße thermoplastische Formmasse F (oder besteht die erfindungsgemäße thermoplastische Formmasse F aus):

(a) 4,5 bis 57,5 Gew.-% der erfindungsgemäßen Mischung P enthaltend Pfropfkautschuke P-I und P-II;

(b) 22,5 bis 95,5 Gew.-% an kautschukfreiem Copolymer P-III;

(c) 0 bis 10 Gew.-% an nicht aus Vinylmonomeren aufgebauten thermoplastischen Polymeren T; und

(d) 0 bis 10 Gew.-%, 0 bis 5 Gew.-%, eines oder mehrerer Additive und/oder Verarbeitungshilfsmittel D';

wobei Summe der Komponenten (a) bis (d) 100 Gew.-% beträgt.
Bei der vorgenannten Formmasse beträgt das Gewichtsverhältnis der Pfropfkautschuke P-I:P-II in der Mischung P bevorzugt 70:30 bis 35:65.
Gemäß der vorgenannten bevorzugten Ausführungsform enthält die erfindungsgemäße thermoplastische Formmasse F bevorzugt (oder besteht die erfindungsgemäße thermoplastische Formmasse F bevorzugt aus):

(a) 22,5 bis 45 Gew.-% der erfindungsgemäßen Mischung P enthaltend Pfropfkautschuke P-I und P-II;
(b) 55,5 bis 77,5 Gew.-% mindestens einer kautschukfreien Copolymer-Matrix P-III; und
(d) 0 bis 10 Gew.-%, bevorzugt 0 bis 5 Gew.-%, eines oder mehrerer Additive und/oder Verarbeitungshilfsmittel D';

wobei die Summe der Komponenten (a), (b) und (d) 100 Gew.-% beträgt.
Bei der vorgenannten Formmasse beträgt das Gewichtsverhältnis der Pfropfkautschuke P-I:P-II in der Mischung P bevorzugt 70:30 bis 35:65.
Gemäß einer weiteren bevorzugten Ausführungsform enthält die erfindungsgemäße thermoplastische Formmasse F (oder besteht die erfindungsgemäße thermoplastische Formmasse F aus):

(a) 4,5 bis 57,5 Gew.-% der erfindungsgemäßen Mischung P enthaltend Pfropfkautschuke P-I und P-II;
(b) 15 bis 40 Gew.-% mindestens einer kautschukfreien Copolymer-Matrix P-III;
(c) 25 bis 55 Gew.-% an einem oder mehreren nicht aus Vinylmonomeren aufgebauten thermoplastischen Polymeren

T; und
(d) 0 bis 10 Gew.-%, bevorzugt 0 bis 5 Gew.-%, eines oder mehrerer Additive und/oder Verarbeitungshilfsmittel D';

wobei die Summe der Komponenten (a) bis (d) 100 Gew.-% beträgt.

Bei der vorgenannten Formmasse beträgt das Gewichtsverhältnis der Pfropfkautschuke P-I:P-II in der Mischung P bevorzugt 70:30 bis 35:65.

Gemäß der vorgenannten bevorzugten Ausführungsform enthält die erfindungsgemäße thermoplastische Formmasse F besonders bevorzugt (oder besteht die erfindungsgemäße thermoplastische Formmasse F besonders bevorzugt aus):

(a) 22,5 bis 34,5 Gew.-% der erfindungsgemäßen Mischung P enthaltend Pfropfkautschuke P-I und P-II;
(b) 15 bis 35 Gew.-% mindestens einer kautschukfreien Copolymer-Matrix P-III;
(c) 25,5 bis 50 Gew.-% an einem oder mehreren nicht aus Vinylmonomeren aufgebauten thermoplastischen Polymeren T; und
(d) 0 bis 10 Gew.-%, bevorzugt 0 bis 5 Gew.-%, eines oder mehrerer Additive und/oder Verarbeitungshilfsmittel D;

wobei die Summe der Komponenten (a) bis (d) 100 Gew.-% beträgt.

Bei der vorgenannten Formmasse beträgt das Gewichtsverhältnis der Pfropfkautschuke P-I:P-II in der Mischung P bevorzugt 70:30 bis 35:65.

Ein bevorzugtes Ausführungsbeispiel für die Zusammensetzung der thermoplastischen Formmasse F ist auch dem untenstehenden experimentellen Beispielteil zu entnehmen.

Ein weiterer Aspekt der vorliegenden Erfindung ist ein Verfahren zur Herstellung einer thermoplastischen Formmasse F gemäß der Erfindung.

Gemäß dem erfindungsgemäßen Verfahren erfolgt die Herstellung der thermoplastischen Formmasse F gemäß der Erfindung durch Vermengen der Komponenten (a), (b) und gegebenenfalls (c) und/oder (d), und Compoundierung in der Schmelze, bevorzugt bei einer Temperatur von 200 bis 300°C.

Bei dem erfindungsgemäßen Verfahren werden die jeweiligen Bestandteile in bekannter Weise vermischt und bei geeigneten Temperaturen, insbesondere bei 200°C bis 300°C, in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Dabei kann die Herstellung der erfindungsgemäßen thermoplastischen Formmasse F sowohl direkt über die Vermischung der jeweiligen Bestandteile als auch durch die Verwendung von Konzentraten/Präcompounds dieser Bestandteile erfolgen. Diese Konzentrate werden in bekannter Weise bei geeigneten Temperaturen, insbesondere bei 200°C bis 300°C, in üblichen Aggregaten wie Innenknetern, Extrudern und Doppelwellenschnecken hergestellt.

## Formkörper und Verwendung

Darüber hinaus sind weitere Gegenstände der Erfindung ein Verfahren zur Herstellung von Formkörpern aus den erfindungsgemäßen Formmassen, Formkörper hergestellt aus den erfindungsgemäßen Formmassen, und die Verwendung der erfindungsgemäßen Formmassen und/oder der erfindungsgemäßen Formkörper.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien und die Folienhinterspritzung.

Beispiele für solche Formkörper sind Folien, Profile, Gehäuseteile jeder Art, beispielsweise für Haushaltsgeräte wie Saftpressen, Kaffeemaschinen, Mixer, Fernsehgeräte; für Büromaschinen wie Monitore, Drucker, Kopierer, Notebooks, Flatscreens; Karosserie- bzw. Innenbauteile für Nutzfahrzeuge, insbesondere für den Automobilbereich; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen. Insbesondere können die erfindungsgemäßen Formmassen auch zur Herstellung von folgenden Formkörpern verwendet werden: Innenausbauteile für Schienenfahrzeuge, Schiffe, Flugzeuge, Busse und andere Kraftfahrzeuge, Karosserieaußenteile im Kfz-Bereich, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Vorrichtung zur Haltung oder Versorgung von Kleintieren, Formkörper für Sanitär- und Badausrüstungen, Abdeckgitter für Lüfteröffnungen, Formkörper für Garten- und Gerätehäuser, Gehäuse für Gartengeräte.

Die im Folgenden gezeigten Beispiele und Ansprüche erläutern die Erfindung.

Beispiele

Herstellen der ABS-Pfropfkautschuke

Pfropfkautschuk P-II-L1

50 Gew.-Teile (gerechnet als Feststoff) eines anionisch emulgierten Polybutadien-Latex mit einem mittleren Teilchendurchmesser $d_{50}$ von 113 nm (Polybutadienlatex C) und einem Gelgehalt von 91 Gew.-%, welcher unter Verwendung eines Polybutadien-Saatlatex mit einem mittleren Teilchendurchmesser $d_{50}$ von 49 nm durch radikalische Saatpolymerisation hergestellt wurde, wurde mit entionisiertem Wasser auf einen Feststoffgehalt von ca. 27 Gew.-% gebracht.

Der Polybutadien-Latex wurde auf 60°C erwärmt. Danach wurden 50 Gew.-Teile eines Gemisches aus 74.5 Gew.-% Styrol, 25,5 Gew.-% Acrylnitril und 0,1 Gew.-Teile tert-Dodecylmercaptan innerhalb von 4 Stunden gleichmäßig dosiert. Parallel dazu wurden 1,3 Gew.-Teile (gerechnet als Festsubstanz) des Natriumsalzes eines Harzsäuregemisches (Handelsprodukt Burez® DRS S70 E von Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 4 Stunden dosiert. Parallel dazu wurden 0,5 Gew.-Teile Kaliumperoxodisulfat (gelöst in Wasser) über einen Zeitraum von 5 Stunden dosiert, wobei die Dosierrate in den ersten 30 Minuten 0,5 Gew.-Teile pro Stunde und in den folgenden 270 Minuten 0,056 Gew.-Teile pro Stunde betrug. Die Temperaturführung wurde so gestaltet, dass innerhalb von 2 Stunden nach Dosierbeginn ein Temperaturminimum von 56°C durchlaufen wurde. Anschließend wurde die Reaktionstemperatur, so angehoben, dass bei Ende der Dosierung des Initiators eine Temperatur von 81°C erreicht wurde.

Nach Ende aller Dosierungen folgte eine zweistündige Nachreaktionszeit bei 81°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfkautschuks betrug 34,4 Gew.-%.

Pfropfkautschuk L2

50 Gew.-Teile (gerechnet als Feststoff) eines anionisch emulgierten Polybutadien- Latex mit einem mittleren Teilchendurchmesser $d_{50}$ von 113 nm und einem Gelgehalt von 91 Gew.-%, welcher unter Verwendung eines Polybutadiensaatlatex mit einem mittleren Teilchendurchmesser $d_{50}$ von 49 nm durch radikalische Saatpolymerisation hergestellt wurde, wurde mit entionisiertem Wasser auf einen Feststoffgehalt von ca. 27 Gew.-% gebracht.

Der Polybutadien-Latex wurde auf 60°C erwärmt und mit 0,25 Gew.-Teilen Kaliumperoxodisulfat (gelöst in Wasser) versetzt. Nach 30 Minuten wurden 50 Gew.-Teile eines Gemisches aus 74.5 Gew.-% Styrol, 25,5 Gew.-% Acrylnitril und 0,1 Gew.-Teile tert-Dodecylmercaptan innerhalb von 5 Stunden gleichmäßig dosiert. Parallel dazu wurde 1,3 Gew.-Teil (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 5 Stunden dosiert. Parallel dazu wurden 0,25 Gew.-Teile Kaliumperoxodisulfat (gelöst in Wasser) über einen Zeitraum von 6 Stunden dosiert.

Im Laufe der 6 Stunden wurde die Reaktionstemperatur von 60°C auf 81°C angehoben, ohne ein Temperaturminimum von 56°C zu durchlaufen. Nach Ende aller Dosierungen folgte eine zweistündige Nachreaktionszeit bei 81°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfkautschuks betrug 34,2 Gew.-%.

Pfropfkautschuk P-I-L3

36 Gew.-Teile (gerechnet als Feststoff) eines anionisch emulgierten Polybutadien-Latex mit einem mittleren Teilchendurchmesser $d_{50}$ von 299 nm und einem Gelgehalt von 60 Gew.-% (Polybutadienlatex A), welcher unter Verwendung eines Polybutadien-Saatlatex (Polybutadienlatex C) mit einem mittleren Teilchendurchmesser $d_{50}$ von 113 nm durch radikalische Emulsionspolymerisation hergestellt wurde, und 24 Gew.-Teile (gerechnet als Feststoff) eines anionisch emulgierten Polybutadien-Latex mit einem mittleren Teilchendurchmesser $d_{50}$ von 371 m und einem Gelgehalt von 82 Gew.-% (Polybutadienlatex B), welcher unter Verwendung eines Polybutadien-Saatlatex mit einem mittleren Teilchendurchmesser $d_{50}$ von 113 nm (Polybutadienlatex C) durch radikalische Emulsionspolymerisation hergestellt wurde, wurden gemischt und mit entionisiertem Wasser auf einen Feststoffgehalt von ca. 27 Gew.-% gebracht.

Die Mischung der Polybutadien-Latices wurde auf 60°C erwärmt. Danach wurden 40 Gew.-Teile eines Monomergemisches aus 74,5 Gew.-% Styrol, 25,5 Gew.-% Acrylnitril und 0,12 Gew.- Teile tert-Dodecylmercaptan innerhalb von 4 Stunden gleichmäßig dosiert. Parallel dazu wurde 1,3 Gew.-Teile (gerechnet als Festsubstanz) des Natriumsalzes

eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 4 Stunden dosiert. Parallel dazu wurden 0,5 Gew.-Teile Kaliumperoxodisulfat (gelöst in Wasser) über einen Zeitraum von 5 Stunden dosiert, wobei die Dosierrate in den ersten 30 Minuten 0,5 Gew.-Teile pro Stunde und in den folgenden 270 Minuten 0,056 Gew.-Teile pro Stunde betrug.

Die Temperaturführung wurde so gestaltet, dass innerhalb von 2 Stunden nach Dosierbeginn ein Temperaturminimum von 56°C durchlaufen wurde. Anschließend wurde die Reaktionstemperatur, so angehoben, dass bei Ende der Dosierung des Initiators eine Temperatur von 80°C erreicht wurde.

Nach Ende aller Dosierungen folgte eine zweistündige Nachreaktionszeit bei 80°C. Anschließend wurde der Pfropfkautschuk auf Raumtemperatur abgekühlt. Der gravimetrisch ermittelte Feststoffgehalt (Trocknung im Umlufttrockenschrank bei 180°C, 23 Minuten) des Pfropfkautschuks betrug 34,8 Gew.-%.

Pfropfkautschuk L4

36 Gew.-Teile (gerechnet als Feststoff) eines anionisch emulgierten Polybutadien-Latex mit einem mittleren Teilchendurchmesser $d_{50}$ von 299 nm und einem Gelgehalt von 60 Gew.-%, welcher unter Verwendung eines Polybutadien-Saatlatex mit einem mittleren Teilchendurchmesser $d_{50}$ von 113 nm durch radikalische Emulsionspolymerisation hergestellt wurde, und 24 Gew.-Teile (gerechnet als Feststoff) eines anionisch emulgierten Polybutadien-Latex mit einem mittleren Teilchendurchmesser $d_{50}$ von 371 m und einem Gelgehalt von 82 Gew.-%, welcher unter Verwendung eines Polybutadien-Saatlatex mit einem mittleren Teilchendurchmesser $d_{50}$ von 113 nm durch radikalische Emulsionspolymerisation hergestellt wurde, wurden gemischt und mit entionisiertem Wasser auf einen Feststoffgehalt von ca. 27 Gew.-% gebracht.

Die Mischung der Polybutadien-Latices wurde auf 60°C erwärmt und mit 0,25 Gew.- Teilen Kaliumperoxodisulfat (gelöst in Wasser) versetzt. Nach 30 Minuten wurden 40 Gew.-Teile eines Monomergemisches aus 74,5 Gew.-% Styrol, 25,5 Gew.-% Acrylnitril und 0,12 Gew.- Teile tert-Dodecylmercaptan innerhalb von 5 Stunden gleichmäßig dosiert. Parallel dazu wurde 1,3 Gew.-Teile (gerechnet als Festsubstanz) des Natriumsalzes eines Harzsäuregemisches (Handelsprodukt Burez DRS S70 E, des Unternehmens Lawter BVBA, B-9130 Kallo, Belgien (Spezifikationsdaten: Säurezahl: 11 mg KOH/g, Gehalt an Abietinsäure: < 1 %, Gehalt an Dehydroabietinsäure: 38%), gelöst in alkalisch eingestelltem Wasser) über einen Zeitraum von 5 Stunden dosiert. Parallel dazu wurden 0,25 Gew.-Teile Kaliumperoxodisulfat (gelöst in Wasser) über einen Zeitraum von 6 Stunden dosiert.

Im Laufe der 6 Stunden wurde die Reaktionstemperatur von 60°C auf 80°C angehoben, ohne ein Temperaturminimum von 56°C zu durchlaufen. Nach Ende aller Dosierungen folgte eine zweistündige Nachreaktionszeit bei 80°C. Anschließend wurde der Pfropflatex auf Raumtemperatur abgekühlt. Der gravimetrisch ermittelte Feststoffgehalt (Trocknung im Umlufttrockenschrank bei 180°C, 23 Minuten) des Pfropfcopolymerlatex betrug 34,9 Gew.-%.

Herstellung Pfropfkautschukmischung P1 aus Pfropfkautschuken P-II-L1 und P-I-L3

Die Pfropfkautschuke P-II-L1 und P-I-L3 wurden im Gewichtsverhältnis 45% : 55%, gerechnet als Feststoff, durch Rühren vermischt. Zu dieser Mischung (= Propfkautschukmischung P1 aus P-II-L1/P-I-L3) wurde 1,0 Gew.-% eines phenolischen Antioxidans (Irganox® 1076, BASF SE), bezogen auf den Gesamtfeststoff der Pfropfkautschukmischung P, in Form einer Dispersion zugegeben und vermischt.

Anschließend wurde mit einer Magnesiumsulfat/Schwefelsäure-Lösung gefällt. Die Konzentration des Magnesiumsulfats in der Magnesiumsulfat/Schwefelsäure-Lösung betrug 1 Gew.-% und die Konzentration der Schwefelsäure betrug 0,07 Gew.-%. Die Konzentration der Pfropfkautschukmischung P1 in der ausgefällten Dispersion betrug 16 Gew.-%. Die Fällung wurde durchgeführt, indem die Magnesiumsulfat/Schwefelsäure-Lösung vorgelegt wurde und die stabilisierte Pfropfkautschukmischung P1 unter Rühren zugegeben und anschließend auf 95°C erwärmt wurde. Die Pfropfkautschukmischung P1 wurde durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet.

Herstellung Pfropfkautschukmischung V1 (nicht erfindungsgemäß) aus Pfropfkautschuken L2 und L4

Die Pfropfkautschuke L2 und L4 wurden im Gewichtsverhältnis 45% : 55%, gerechnet als Feststoff, durch Rühren vermischt. Zu dieser Mischung V1 der Pfropfkautschuke L2/L4 wurde 1,0 Gew.-% eines phenolischen Antioxidans (Irganox® 1076, BASF SE), bezogen auf den Gesamtfeststoff der Pfropfkautschukmischung, in Form einer Dispersion zugegeben und vermischt.

Anschließend wurde mit einer Magnesiumsulfat/Schwefelsäure-Lösung gefällt. Die Konzentration des Magnesiumsulfats in der Magnesiumsulfat/Schwefelsäure-Lösung betrug 1 Gew.-% und die Konzentration der Schwefelsäure

betrug 0,07 Gew.-%. Die Konzentration der Pfropfkautschukmischung L2/L4 in der ausgefällten Dispersion betrug 16 Gew.-%. Die Fällung wurde durchgeführt, indem die Magnesiumsulfat/Schwefelsäure-Lösung vorgelegt wurde und die stabilisierte Pfropfkautschukmischung unter Rühren zugegeben und anschließend auf 95°C erwärmt wurde. Die Mischung V1 der Pfropfkautschuke L2 und L4 wurde durch Vakuumfiltration von der wässrigen Phase abgetrennt und mit 1000 Gew.-Teilen Wasser gewaschen. Das resultierende feuchte Pulver wurde bei 70°C im Umlufttrockenschrank bis zu einer Restfeuchte < 1 Gew.-% (gravimetrische Bestimmung) getrocknet.

Herstellung der ABS-Formmassen

Kautschukfreie Copolymer-Matrix P-III-A1

Als kautschukfreie Copolymer-Matrix P-III-A1 wurde ein statistisches Styrol/Acrylnitril-Copolymer (Styrol-Acrylnitril-Gewichtsverhältnis 73:27) mit einer gewichtsgemittelten Molmasse $M_w$ von 106.000 g/mol und einer zahlengemittelten Molmasse $M_n$ von 15.000 g/mol eingesetzt. Die kautschukfreie Copolymer-Matrix P-III-A1 wurde erhalten durch radikalische Lösungspolymerisation mit peroxidischer Initiierung und wies einen Oligomerengehalt mit einer Molmasse kleiner 1000 g/mol von 1,0 Gew.-% auf. Die Molmassen $M_w$ und $M_n$, sowie der Oligomerengehalt wurden durch Gelpermeationschromatographie mit Tetrahydrofuran als Lösungsmittel und Polystyrol zur Kalibrierung ermittelt. Zur Bestimmung des Oligomerenanteils in statistischem Styrol/Acrylnitril-Copolymer siehe: K. Kirchner, H. Schlapkohl, Makromol. Chem. 177 (1976) 2031 -2042, "The Formation of Oligomers in the Thermal Copolymerisation of the Styrene/Acrylonitrile- System".

Kautschukfreie Copolymer-Matrix P-III-A2

Als kautschukfreie Copolymer-Matrix P-III-A2 wurde ein statistisches Styrol/Acrylnitril-Copolymer (Styrol-Acrylnitril-Gewichtsverhältnis 76,5:23,5) mit einer gewichtsgemittelten Molmasse $M_w$ von 145.000 g/mol und einer Polydispersität von $M_w/M_n$ < 3 eingesetzt. Die Molmassen $M_w$ und $M_n$ wurden durch Gelpermeationschromatographie mit Tetrahydrofuran als Lösungsmittel und Polystyrol zur Kalibrierung ermittelt. Die kautschukfreie Copolymer-Matrix P-III-A2 wurde erhalten durch radikalische Lösungspolymerisation und wies eine thermoplastische Fließfähigkeit (MVR) bei 220°C und 10 kg von 40 ml/10 Minuten auf.

Kautschukfreie Copolymer-Matrix P-III-A3

Als kautschukfreie Copolymer-Matrix P-III-A3 wurde ein statistisches Styrol/Acrylnitril-Copolymer (Styrol-Acrylnitril-Gewichtsverhältnis 75:25) mit einer gewichtsgemittelten Molmasse $M_w$ von 185.000 g/mol und einer Polydispersität von $M_w/M_n$ < 3 eingesetzt. Die Molmassen $M_w$ und $M_n$ wurden durch Gelpermeationschromatographie mit Tetrahydrofuran als Lösungsmittel und Polystyrol zur Kalibrierung ermittelt. Die kautschukfreie Copolymer-Matrix P-III-A3 wurde erhalten durch radikalische Lösungspolymerisation und wies eine thermoplastische Fließfähigkeit (MVR) bei 220°C und 10 kg von 10 ml/10 Minuten auf.

Kautschukfreie Copolymer-Matrix P-III-A4

Als kautschukfreie Copolymer-Matrix P-III-A4 wurde ein durch radikalische Lösungspolymerisation hergestelltes statistisches Terpolymer aus Styrol, Acrylnitril und Maleinsäureanhydrid (Styrol-Acrylnitril-Maleinsäureanhydrid Gewichtsverhältnis 66,4:31,5:2,1) eingesetzt, welches eine thermoplastische Fließfähigkeit (MVR) bei 220°C und 10 kg von 18-26 ml/10 Minuten aufweist.

Polycarbonat (T-1):

Es wurde lineares Polycarbonat auf Bisphenol-A Basis mit einem gewichtsgemittelten Molekulargewicht $M_w$ von 27.500 g/mol verwendet. Die Molmasse $M_w$ wurde durch Gelpermeationschromatographie mit Methylenchlorid als Lösungsmittel bei 25°C ermittelt.

Polyamid (T-2):

Es wurde Polyamid 6 mit einer Viskositätszahl von 105-135 ml/g verwendet. Die Viskositätszahl (VZ) des Polyamids wurde nach ISO 307 an 0,5 gew.-%iger Lösung in konzentrierter Schwefelsäure (96 Gew.-% $H_2SO_4$) bei 25°C bestimmt.

Thermoplastische ABS Formmassen F1-F4

Die oben beschriebenen Polymerkomponenten wurden in den in Tabelle 2 angegebenen Mengen (Angaben in Gew.-%) zusammen mit 2 Gew.-Teilen Ethylenbisstearylamid, 0,30 Gew.-Teilen Magnesiumstearat und 0,15 Gew.-Teilen eines Polydimethylsiloxans mit einer Viskosität von 1000 mPas (Messung bei 25°C) in einem Extruder ZSK 25 (Hersteller Coperion) bei 250°C zu den Formmassen F1-F4 vermischt und nach Granulierung zu Formkörpern verarbeitet.

Thermoplastische PC/ABS-Formmassen F5-F6

Die oben beschriebenen Polymerkomponenten wurden in den in Tabelle 3 angegebenen Mengen (Angaben in Gew.-%) zusammen mit 0,75 Gew.-Teilen Pentaerythritoltetrastearat, 0,12 Gew.-Teilen Irganox® B900 (BASF SE) und 0,1 Gew.-Teilen Irganox® 1076 (BASF SE) in einem Extruder ZSK 25 (Hersteller Coperion) bei 270°C zu den Formmassen F5 und F6 vermischt und nach Granulierung zu Formkörpern verarbeitet.

Thermoplastische PA-ABS Formmassen F7-F8

Die oben beschriebenen Polymerkomponenten wurden in den in Tabelle 4 angegebenen Mengen (Angaben in Gew.-%) zusammen mit 0,5 Gew.-Teilen Irganox B802 (BASF SE) und 1,0 Gew.-Teilen Irganox 1076 (BASF SE) in einem Extruder ZSK 25 (Hersteller Coperion) bei 260°C zu den Formmassen F7 und F8 vermischt und nach Granulierung zu Formkörpern verarbeitet.

Es wurden die Formmassen F1-F8 und daraus hergestellte Formkörper erhalten. Die Formkörper entsprechen den Vorgaben der jeweiligen Prüfnormen.

Folgende Eigenschaften der Formmassen bzw. Formkörper wurden ermittelt:

- Kerbschlagzähigkeit bei Raumtemperatur (ak RT) und bei -30°C (ak -30°C) nach DIN EN ISO 179-2/1eA (Einheit: $kJ/m^2$)
- thermoplastische Fließfähigkeit ($cm^3$/10 min):
- MVR (220/10) bei 220°C und 10 kg Belastung nach ISO 1133, Einheit: $cm^3$/10 min)
- MVR (260/5) bei 260°C und 5 kg Belastung nach ISO 1133, Einheit: $cm^3$/10 min)
- Vicat-Erweichungstemperatur B/50 nach ISO 306 (Einheit °C)
- Kugeldruckhärte nach ISO 2039-1 (Einheit MPa bzw. $N/mm^2$)
- Zugelastitzitätsmodul, E-Modul $E_t$ (Einheit MPa bzw. $N/mm^2$) aus einem Zugversuch nach EN ISO 527-1
- Rohton: Die Beurteilung der Eigenfarbe/des Rohtons erfolgte durch die Bestimmung des Yellowness Index (YI) nach ASTM-Methode E313, die für den Spritzguss der Testplatten verwendeten Schmelze- und Formtemperaturen sind in Grad Celsius angegeben
- Glanz bei 20° und 60° nach DIN EN ISO 2813, die für den Spritzguss der Testplatten verwendeten Schmelze- und Formtemperaturen sind in Klammern in Grad Celsius angegeben
- $d_{50}$: Für die Messung des Teilchendurchmessers $d_{50}$ mit der Scheibenzentrifuge DC 24000 von CPS Instruments Inc., die mit einer Scheibe mit niedriger Dichte ausgestattet ist, wurde eine wässrige Zuckerlösung von 17,1 mL mit einem Dichtegradienten von 8 bis 20 Gew.-% Saccharose in der Zentrifugenscheibe verwendet, um ein stabiles Flotationsverhalten der Partikel zu erreichen. Zur Kalibrierung wurde ein Polybutadienlatex mit einer engen Verteilung und einer mittleren Partikelgröße von 405 nm verwendet. Die Messungen wurden bei einer Rotationsgeschwindigkeit der Scheibe von 24.000 U/min durchgeführt, indem 0,1 mL einer verdünnten Kautschukdispersion in eine wässrige 24% ige Saccharoselösung injiziert wurden. Die Massenverteilung der Teilchendurchmesser wurde mit Hilfe der Mie-Theorie berechnet.
- Kautschukeffektivität 1 (KE-Zahl 1) (dimensionslos): Maß für die Leistung des Pfropfkautschuks, definiert als die Summe von Kerbschlagzähigkeit bei Raumtemperatur (ak RT) und thermoplastischer Fließfähigkeit (MVR (220/10)). Je höher der Wert von KE-Zahl 1, desto besser die Kautschukeffektivität.
- Kautschukeffektivität 2 (KE-Zahl 2) (dimensionslos): Maß für die Leistung des Pfropfkautschuks, definiert als das Produkt von Kerbschlagzähigkeit bei Raumtemperatur (ak RT) und E-Modul. Je höher der Wert von KE-Zahl 2, desto besser die Kautschukeffektivität.
- Stippen-Test: Die Oberflächenqualität wurde durch Messung der Stippenanzahl im Bereich < 250 μm, 250 - 450 μm und > 450 μm (Einheit $1/m^2$) bestimmt, wobei eine kleinere Stippenanzahl ein besseres Ergebnis bedeutet. Dazu wurden Oberflächenuntersuchungen mit einem Collin Extruder Typ 25 x 25 L/D und angefügten OCS Kameras, Typ FSA 100 (Fa. OCS Optical Control Systems GmbH, Wullener Feld 24, 58454 Witten, Deutschland) mit einer Auflösung von 50 μm durchgeführt. Das Material wurde hierzu aufgeschmolzen, durch eine 150 mm-Breitschlitzdüse mit einem von Düsenspalt 2,0 mm extrudiert, durch mehrere Führungsrollen geleitet und als Band auf einer Rolle aufgewickelt. Hierbei passierte das Band die Kameras, wo im Auflicht die Partikel auf der Oberfläche quantitativ

analysiert wurden. Die inspizierte Fläche, an denen die Stippenanzahl gemessen wurde, betrug dabei 1,0 $m^2$.

- Hydrolysebeständigkeit: Als Maß für die Hydrolysebeständigkeit der hergestellten Zusammensetzungen dient die Änderung des MVR gemessen nach ISO 1133 bei 260°C mit einer Stempellast von 5 kg bei einer 7-tägigen Lagerung des Granulats bei 95°C und 100% relativer Luftfeuchte ("FWL-Lagerung"). Dabei wird der Anstieg des MVR-Wertes gegenüber dem MVR-Wert vor der entsprechenden Lagerung als ΔMVR (hydr.), welcher sich durch nachstehende Formel definiert, berechnet:

$$\Delta MVR(hyrdr) = \frac{MVR(nach\,FWL - Lagerung) - MVR(vor\,Lagerung)}{MVR(vor\,Lagerung)} \bullet 100\%$$

- Verarbeitungsstabilität: Als Maß für die Verarbeitungsstabilität der so hergestellten Zusammensetzungen dient die Änderung (in Prozent) des MVR gemessen nach ISO 1133 bei 260°C mit einer Stempellast von 5 kg bei einer 15-minütigen Verweilzeit der Schmelze unter Luftausschluss bei einer Temperatur von 300°C (IMVR). Die resultierende Größe ΔMVR(proc.) berechnet sich durch nachstehende Formel:

$$\Delta MVR(proc.) = \frac{MVR(nach\,Schmelzelagerung) - MVR(vor\,Lagerung)}{MVR(vor\,Lagerung)} \bullet 100\%$$

Die hierin genannten DIN-, ASTM- und ISO-Normen sind bevorzugt die im Juni 2022 aktuellsten Versionen.

Von den Pfropfkautschuklatices P-II-L1, P-I-L, L2 und L4 wurde die Latexstabilität wie folgt bestimmt:
Ein Ultra-Turrax Gerät Typ T45 von Janke & Kunkel (600W, 10000 UPM Nenndrehzahl) wird in ein 100ml-Becherglas enthaltend 50g Latex eingetaucht und eingeschaltet. Mittels einer Stoppuhr wird die Zeit gemessen bis der Latex vollständig koaguliert ist.

Je mehr Zeit bis zur vollständigen Koagulation des Latex vergangen ist, desto höher ist die Latexstabilität.

Tabelle 1: Stabilität der Pfropfkautschuklatices

| Pfropfkautschuklatex | | Latexstabilität [s] |
|---|---|---|
| P-II-L1 | erfindungsgemäß eingesetzt | 88 |
| L2 | Vergleich | 63 |
| P-I-L3 | erfindungsgemäß eingesetzt | 101 |
| L4 | Vergleich | 54 |

Es wurde überraschend gefunden (s. Tab. 1), dass die Pfropfkautschuklatices P-II-L1 und P-I-L3 der erfindungsgemäßen Mischung P1, eine deutlich höhere Latexstabilität aufweisen als die Pfropfkautschuklatices L2 und L4 (Vergleich V1). Dies ist besonders vorteilhaft, da Latices mit einer höheren Latexstabilität während des Produktions- und Verarbeitungsprozess weniger Koagulat bilden, das die Ausbeute herabsetzt und obendrein als Abfall entsorgt werden muss.

Die Herstellung der Pfropfkautschuklatices P-II-L1 und P-I-L3 bzw. der erfindungsgemäßen Mischung P1 erfolgt zudem durch ein effizienteres (verkürzte Zykluszeiten) und für die Umwelt verträglicheres Verfahren (weniger Koagulat/Abfall).

Tabelle 2: Zusammensetzung und Prüfdaten der Formmassen F1-F4

| Formmassen | | F1 | F2 | F3 | F4 |
|---|---|---|---|---|---|
| | | erfindungsgemäß | Vergleich | erfindungsgemäß | Vergleich |
| Zusammensetzung | | | | | |
| Pfropfkautschukmischung P1 | [Gew.-%] | 30 | | 40 | |
| Pfropfkautschukmischung V1 | [Gew.-%] | | 30 | | 40 |

(fortgesetzt)

| Formmassen | | F1 | F2 | F3 | F4 |
|---|---|---|---|---|---|
| | | erfindungsgemäß | Vergleich | erfindungsgemäß | Vergleich |
| Zusammensetzung | | | | | |
| Kautschukfreie Copolymer-Matrix P-III-A1 | [Gew.-%] | 70 | 70 | 60 | 60 |
| Ethylenbisstearylamid | [Gew.-%] | 2,0 | 2,0 | 2,0 | 2,0 |
| Magnesiumstearat | [Gew.-%] | 0,30 | 0,30 | | |
| Polydimethylsiloxan (Viskosität 1000 cSt) | [Gew.-%] | 0,15 | 0,15 | 0,15 | 0,15 |
| Messergebnisse | | | | | |
| Kerbschlagzähigkeit bei Raumtemperatur (ak RT) | [kJ/m$^2$] | 18,1 | 17,9 | 24,4 | 24,3 |
| MVR (220°C/10 kg) | [cm$^3$/10 min] | 33,2 | 32,5 | 23,1 | 22,5 |
| KE-Zahl 1 (ak RT+ MVR) | | 51,3 | 50,4 | 47,5 | 46,8 |
| Hardness | [N/mm$^2$] | 107 | 109 | 90 | 92 |
| E-Modulus | [N/mm$^2$] | 2291 | 2298 | 2019 | 1998 |
| Zugfestigkeit (SB) | [N/mm$^2$] | 45,0 | 45,0 | 42,1 | 41,8 |
| Bruchspannung (SR) | [N/mm$^2$] | 32,2 | 32,5 | 30,1 | 30,2 |
| Bruchdehnung (DR) | [%] | 48,1 | 39,3 | 22,4 | 20,1 |
| Glanz bei 20° (240°C/80°C) | [%] | 92 | 83 | 96 | 91 |
| Glanz bei 60° (240°C/80°C) | [%] | 99 | 97 | 99 | 99 |
| Rohton (240°C/80°C) | | 25,2 | 24,8 | 30,1 | 33,8 |
| Stippenanzahl <250 μm | [1/m$^2$] | 119 | 781 | 84 | 139 |
| Stippenanzahl 250-450 μm | [1/m$^2$] | 11 | 148 | 19 | 31 |
| Stippenanzahl >450 μm | [1/m$^2$] | 4 | 81 | 6 | 13 |
| KE-Zahl 2 (E-Modul x ak RT) | | 41467 | 41134 | 49264 | 48551 |

Mit den Prüfergebnissen der Formmassen F1-F4 (s. Tab. 2) wurde überraschend gefunden, dass die erfindungsgemäßen Formmassen F1 und F3, die die erfindungsgemäße Pfropfkautschukmischung P1 enthalten - im Vergleich zu den nicht erfindungsgemäßen Formmassen F2 und F4 - eine verbesserte Oberflächenqualität (insbesondere weniger Stippen und höherer Glanz) bei ansonsten vergleichbaren Eigenschaften aufweisen. Darüber hinaus ist auch die Kautschukeffektivität (KE-Zahl 1 und KE-Zahl 2) der erfindungsgemäßen Formmassen höher als die der Vergleichsbeispiele.

Tabelle 3: Zusammensetzung und Prüfdaten der Formmassen F5-F6

| Formmassen | | F5 | F6 |
|---|---|---|---|
| | | erfindungsgemäß | Vergleich |
| Zusammensetzung | | | |
| Pfropfkautschukmischung P1 | [Gew.-%] | 25,5 | |
| Pfropfkautschukmischung V2 | [Gew.-%] | | 25,5 |
| Kautschukfreie Copolymer-Matrix P-III-A2 | [Gew.-%] | 31,5 | 31,5 |
| Polycarbonat | [Gew.-%] | 43 | 43 |
| Pentaerythritoltetrastearat | [Gew.-%] | 0,75 | 0,75 |

(fortgesetzt)

| Formmassen | | F5 | F6 |
|---|---|---|---|
| | | erfindungsgemäß | Vergleich |
| Zusammensetzung | | | |
| Irganox B900 | [Gew.-%] | 0,12 | 0,12 |
| Irganox 1076 | [Gew.-%] | 0,10 | 0,10 |
| Messergebnisse | | | |
| Kerbschlagzähigkeit bei Raumtemperatur (ak RT) | [kJ/m$^2$] | 42,6 | 43,3 |
| MVR (260°C/5 kg) | [cm$^3$/10 min] | 21,8 | 15,4 |
| KE-Zahl 1 (ak RT+ MVR) | | 64,4 | 58,7 |
| ΔMFR (hydr.) | [%] | 50,6 | 102,3 |
| Glanz bei 20° (260°C/80°C) | [%] | 94 | 94 |
| Rohton (260°C/80°C) | | 23,4 | 22,9 |
| Rohton (300°C/80°C) | | 30,4 | 30,5 |

Tabelle 4: Zusammensetzung und Prüfdaten der Formmassen F7-F8

| Formmassen | | F7 | F8 |
|---|---|---|---|
| | | erfindungsgemäß | Vergleich |
| Zusammensetzung | | | |
| Pfropfkautschukmischung P1 | [Gew.-%] | 34 | |
| Pfropfkautschukmischung V2 | [Gew.-%] | | 34 |
| Kautschukfreie Copolymer-Matrix P-III-A1 | [Gew.-%] | 5 | 5 |
| Kautschukfreie Copolymer-Matrix P-III-A3 | [Gew.-%] | 8 | 8 |
| Polyamid | [Gew.-%] | 47 | 47 |
| Kautschukfreie Copolymer-Matrix P-III-A4 | [Gew.-%] | 6 | 6 |
| Irganox B802 | [Gew.-%] | 0,5 | 0,5 |
| Irganox 1076 | [Gew.-%] | 1,0 | 1,0 |
| Messergebnisse | | | |
| Kerbschlagzähigkeit bei Raumtemperatur (ak RT) | [kJ/m$^2$] | 62,9 | 61,9 |
| MVR (260°C/5 kg) | [cm$^3$/10 min] | 23,8 | 27,1 |
| IMVR (300°C/5Kg - 15min VWZ) | [cm$^3$/10 min] | 139,1 | 174,9 |
| ΔMVR (proc.) | [%] | 485 | 546 |
| Glanz bei 20° (250°C/50°C) | [%] | 94 | 93 |
| Rohton (250°C/50°C) | | 28,8 | 29,1 |

Mit den Prüfergebnissen der Formmassen F5-F8 (s. Tabellen 3 und 4) wurde überraschend gefunden, dass die erfindungsgemäßen Formmassen F5 und F7, die die erfindungsgemäße Pfropfkautschukmischung P1 enthalten, sich - im Vergleich zu den nicht erfindungsgemäßen Formmassen F6 und F8 - durch eine verbesserte Hydrolysestabilität (F5) bzw. eine verbesserte Schmelze- und Verarbeitungsstabilität (F7) auszeichnen bei ansonsten vergleichbaren Eigenschaften.

**Patentansprüche**

1. Mischung P enthaltend:

(I) mindestens einen Pfropfkautschuk P-I, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, unter Verwendung mindestens einer organischen und/oder anorganischen, bevorzugt anorganischen, Peroxidverbindung als Initiator, in Gegenwart von:

mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm,
wobei die Polybutadienlatices A und B mittels Saatpolymerisation ausgehend von mindestens einem, vorzugsweise einem, Polybutadienlatex C (als Saatlatex) mit einem mittleren Teilchendurchmesser $d_{50}$ von 10 bis 220 nm erhalten wurden;

(II) mindestens einen Pfropfkautschuk P-II, erhalten durch Emulsionspolymerisation von Styrol und Acrylnitril im Gewichtsverhältnis Styrol:Acrylnitril von 95:5 bis 50:50, wobei Styrol und/oder Acrylnitril teilweise ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des mindestens einen Polybutadienlatex C mit einem mittleren Teilchendurchmesser $d_{50}$von 10 bis 220 nm, bevorzugt 30 bis 200 nm; und
(III) optional ein oder mehrere Additive und/oder Verarbeitungshilfsmittel D;

wobei der mittleren Teilchendurchmesser $d_{50}$, durch Scheibenzentrifugen-Messung ermittelt wird,
**dadurch gekennzeichnet, dass** - unabhängig voneinander - bei der Herstellung des Pfropfkautschuks P-I und bei der Herstellung des Pfropfkautschuks P-II,

• die Dosierung der Monomere und die Dosierung des Initiators gleichzeitig gestartet werden;
• die Dosierung der Monomere kontinuierlich innerhalb von 3,50 bis 4,25 Stunden, bevorzugt 3,75 bis 4,25 Stunden, insbesondere 4 Stunden, erfolgt;
• die gesamte Menge des Initiators innerhalb von 4,50 bis 5,25 h, bevorzugt 4,75 bis 5,25 h, insbesondere 5 h, dosiert wird, wobei die Dosierrate des Initiators in den ersten 20 bis 40 Minuten, bevorzugt 25 bis 35 Minuten, insbesondere 30 Minuten, 0,25 bis 0,75 Gew.-Teile pro Stunde, bevorzugt 0,4 bis 0,6 Gew.-Teile pro Stunde, (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde, bevorzugt 0,05 bis 0,06 Gew.-Teile pro Stunde, beträgt.

2. Mischung P gemäß Anspruch 1, wobei der Pfropfkautschuk P-I durch Emulsionspolymerisation von Styrol und Acrylnitril im Gewichtsverhältnis von 80:20 bis 65:35 in Gegenwart der Polybutadienlatices A und B erhalten wurde; und der Pfropfkautschuk P-II durch Emulsionspolymerisation von Styrol und Acrylnitril im Gewichtsverhältnis von 80:20 bis 65:35 in Gegenwart des Polybutadienlatex C erhalten wurde.

3. Mischung P gemäß Anspruch 1 oder 2, wobei der Polybutadienlatex A einen mittleren Teilchendurchmesser $d_{50}$ von 240 bis 320 nm, insbesondere 250 bis 310 nm, und einen Gelgehalt von 30 bis 80 Gew.-%, bevorzugt 40 bis 75 Gew.-%, insbesondere 45 bis 70 Gew.-%, aufweist; der Polybutadienlatex B einen mittleren Teilchendurchmesser $d_{50}$ von 350 bis 470 nm, insbesondere 360 bis 460 nm, und einen Gelgehalt von 50 bis 95 Gew.-%, insbesondere 55 bis 90 Gew.-%, aufweist; und der Polybutadienlatex C einen mittleren Teilchendurchmesser $d_{50}$ von 20 bis 210 nm, insbesondere 30 bis 200 nm, und einen Gelgehalt von 30 bis 98 Gew.-%, bevorzugt 40 bis 95 Gew.-%, insbesondere 50 bis 92 Gew.-%, aufweist,
wobei der Gelgehalt durch Bestimmung nach der Drahtkäfigmethode in Toluol ermittelt wird.

4. Mischung P gemäß einem der Ansprüche 1 bis 3, wobei das Gewichtsverhältnis der Feststoffe der Polybutadienlatices A:B von 90:10 bis 10:90, bevorzugt 80:20 bis 20:80, insbesondere 60:40 bis 40:60 beträgt.

5. Mischung P gemäß einem der Ansprüche 1 bis 4, wobei das Gewichtsverhältnis der Pfropfkautschuke P-I:P-II 90:10 bis 10:90, bevorzugt 80:20 bis 20:80, besonders bevorzugt 70:30 bis 35:65 beträgt.

**6.** Mischung P gemäß einem der Ansprüche 1 bis 5, wobei der Pfropfkautschuk P-I besteht aus:

15 bis 60 Gew.-%, insbesondere 20 bis 50 Gew.-%, einer Pfropfhülle, erhalten durch Emulsionspolymerisation von Styrol und Acrylnitril, wobei Styrol und/oder Acrylnitril teilweise ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus den Polybutadienlatices A und B; und
der Pfropfkautschuk P-II besteht aus:

15 bis 60 Gew.-%, insbesondere 20 bis 50 Gew.-%, einer Pfropfhülle, erhalten durch Emulsionspolymerisation von Styrol und Acrylnitril, wobei Styrol und/oder Acrylnitril teilweise ersetzt werden kann durch alpha-Methylstyrol, Methylmethacrylat, N-Phenylmaleinimid oder Mischungen davon; und
40 bis 85 Gew.-%, insbesondere 50 bis 80 Gew.-%, einer Pfropfgrundstufe aus Polybutadienlatex C.

**7.** Verfahren zur Herstellung einer Mischung P gemäß einem der Ansprüche 1 bis 6, umfassend die folgenden Schritte:

(i) Bereitstellen von mindestens einem Polybutadienlatex C mit einem mittleren Teilchendurchmesser $d_{50}$ von 10 bis 220 nm;
(ii) Herstellen von mindestens einem Polybutadienlatex A mit einem mittleren Teilchendurchmesser $d_{50}$ von 230 bis 330 nm und mindestens einem Polybutadienlatex B mit einem mittleren Teilchendurchmesser $d_{50}$ von 340 bis 480 nm durch Saatpolymerisation auf dem Polybutadienlatex C aus Schritt (i);
(iii) Herstellen eines Pfropfkautschuks P-I durch Emulsionspolymerisation von Styrol und Acrylnitril im Gewichtsverhältnis von 95:5 bis 50:50, wobei Styrol und/oder Acrylnitril teilweise ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart der Polybutadienlatices A und B aus Schritt (ii);
(iv) Herstellen eines Pfropfkautschuks P-II durch Emulsionspolymerisation von Styrol und Acrylnitril im Gewichtsverhältnis von 95:5 bis 50:50, wobei Styrol und/oder Acrylnitril teilweise ersetzt werden kann durch alpha-Methylstyrol, Methylmethacrylat und/oder N-Phenylmaleinimid, unter Verwendung mindestens einer organischen und/oder anorganischen Peroxidverbindung als Initiator, in Gegenwart des Polybutadienlatex C aus Schritt (i);
wobei in den Schritten (iii) und (iv) - unabhängig voneinander -

- die Dosierung der Monomere und die Dosierung des Initiators gleichzeitig gestartet werden;
- die Dosierung der Monomere kontinuierlich innerhalb von 3,50 bis 4,25 Stunden erfolgt;
- die gesamte Menge des Initiators innerhalb von 4,50 bis 5,25 Stunden dosiert wird, wobei die Dosierrate des Initiators in den ersten 20 bis 40 Minuten 0,25 bis 0,75 Gew.-Teile pro Stunde (bezogen auf die gesamte Monomermenge bei der Emulsionspolymerisation und des Feststoffes der Polybutadienlatices) beträgt, und danach die Dosierrate des Initiators 0,03 bis 0,08 Gew.-Teile pro Stunde beträgt;

(v) gegebenenfalls Mischen der Emulsionen enthaltend die Pfropfkautschuke P-I und P-II aus Schritten (iii) und (iv);
(vi) Aufarbeitung der Pfropfkautschuke P-I und P-II aus den Schritten (iii) und (iv) oder Schritt (v), und
(vii) falls Schritt (v) nicht vorhanden ist, Mischen der Pfropfkautschuke P-I und P-II aus Schritt (vi).

**8.** Verfahren zur Herstellung einer Mischung P gemäß Anspruch 7, wobei in den Schritten (iii) und (iv) - unabhängig voneinander - die Emulsionspolymerisation so durchgeführt wird, dass innerhalb von 100 bis 180 Minuten, bevorzugt 110 bis 150 Minuten, nach Beginn der Dosierung des Initiators und der Monomeren ein Temperaturminimum durchlaufen wird, das eine Temperatur aufweist, die um mindestens 1 bis 10°C, bevorzugt 2 bis 8°C, niedriger ist als die Temperatur zu Beginn der Dosierung.

**9.** Verfahren zur Herstellung einer Mischung P gemäß Anspruch 8, wobei die Temperatur zu Beginn der Dosierung des Initiators und der Monomeren 58 bis 68°C, bevorzugt 59 bis 66°C, beträgt; die Temperatur des Temperaturminimums 54 bis 64°C, bevorzugt 55 bis 62°C, beträgt, und die Temperatur bei Ende der Dosierung des Initiators 75 bis 90°C, bevorzugt 78 bis 85°C, beträgt.

**10.** Verfahren zur Herstellung einer Mischung P gemäß Anspruch 7, wobei die Dosierrate des Initiators in den ersten 20 bis 40 Minuten 0,4 bis 0,6 Gew.-Teile pro Stunde beträgt, und danach die Dosierrate des Initiators 0,05 bis 0,06

Gew.-Teile pro Stunde, beträgt.

**11.** Verfahren zur Herstellung einer Mischung P gemäß einem der Ansprüche 7 bis 10, wobei die Aufarbeitung gemäß Schritt (vi) umfasst:

(vi-1) Fällen (gegebenenfalls Co-Fällen) der Pfropfkautschuke P-I und P-II aus der diese Pfropfkautschuke umfassenden Emulsion aus den Schritten (iii) und (iv) oder Schritt (v);
(vi-2) Abtrennen der gefällten Pfropfkautschuke P-I und P-II aus Schritt (vi-1) durch Filtration oder Zentrifugation; und
(vi-3) gegebenenfalls Trocknen der abgetrennten Pfropfkautschuke P-I und P-II aus Schritt (vi-2).

**12.** Verfahren zur Herstellung einer Mischung P gemäß einem der Ansprüche 7 bis 11, worin Schritt (v) vorhanden ist.

**13.** Mischung P gemäß einem der Ansprüche 1 bis 6, erhalten durch das Verfahren gemäß einem der Ansprüche 7 bis 12.

**14.** Thermoplastische Formmasse F enthaltend die Komponenten (a) bis (d):

(a) Mischung P gemäß einem der Ansprüche 1 bis 6 oder Anspruch 13;
(b) mindestens eine kautschukfreie Copolymer-Matrix P-III aus Styrol und Acrylnitril im Gewichtsverhältnis von 95:5 bis 50:50, bevorzugt 80:20 bis 65:35, wobei Styrol teilweise ersetzt werden kann durch alpha-Methylstyrol und/oder Acrylnitril durch Maleinsäureanhydrid;
(c) optional mindestens ein nicht aus Vinylmonomeren aufgebautes thermoplastisches Polymer T; und
(d) optional ein oder mehrere Additive und/oder Verarbeitungshilfsmittel D'.

**15.** Thermoplastische Formmasse F gemäß Anspruch 14, wobei das mindestens eine nicht aus Vinylmonomeren aufgebaute thermoplastische Polymer T ausgewählt ist aus der Gruppe bestehend aus: aromatischen Polycarbonaten, aromatischen Polyestercarbonaten, Polyestern, und Polyamiden.

**16.** Thermoplastische Formmasse F gemäß Anspruch 14 oder 15 enthaltend:

(a) 4,5 bis 57,5 Gew.-% der Mischung P gemäß einem der Ansprüche 1 bis 6 oder Anspruch 10;
(b) 22,5 bis 95,5 Gew.-% kautschukfreies Copolymer P-III;
(c) 0 bis 10 Gew.-% an nicht aus Vinylmonomeren aufgebauten thermoplastischen Polymeren T; und
(d) 0 bis 10 Gew.-% eines oder mehrerer Additive und/oder Verarbeitungshilfsmittel D';

wobei die Summe der Komponenten (a) bis (d) 100 Gew.-% beträgt.

**17.** Thermoplastische Formmasse F gemäß Anspruch 14 oder 15 enthaltend:

(a) 4,5 bis 57,5 Gew.-% der der Mischung P gemäß einem der Ansprüche 1 bis 6 oder Anspruch 10;
(b) 15 bis 40 Gew.-% mindestens einer kautschukfreien Copolymer-Matrix P-III;
(c) 25 bis 55 Gew.-% an einem oder mehreren nicht aus Vinylmonomeren aufgebauten thermoplastischen Polymeren T; und
(d) 0 bis 10 Gew.-% eines oder mehrerer Additive und/oder Verarbeitungshilfsmittel D';

wobei die Summe der Komponenten (a) bis (d) 100 Gew.-% beträgt.

**18.** Verfahren zur Herstellung einer thermoplastischen Formmasse F gemäß einem der Ansprüche 14 bis 17, wobei die Komponenten (a), (b) und gegebenenfalls (c) und/oder (d) vermengt und in der Schmelze, bevorzugt bei einer Temperatur von 200 bis 300°C, compoundiert werden.

**19.** Formkörper aus einer Formmasse F gemäß einem der Ansprüche 14 bis 17 erhältlich durch Spritzguss, Extrusion, Blasformverfahren oder durch Tiefziehen.

**20.** Verwendung einer Formmasse F gemäß einem der Ansprüche 14 bis 17 oder eines Formkörpers gemäß Anspruch 19 für Gehäuseteile bzw. Bauteile im Haushalts-, Büro-, Automobil- und/oder Gartenbereich.

## Claims

1. Mixture P containing:

(I) at least one graft rubber P-I, obtained by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, using at least one organic and/or inorganic, preferably inorganic, peroxide compound as initiator, in the presence of:

at least one polybutadiene latex A with an average particle diameter $d_{50}$ of 230 to 330 nm and at least one polybutadiene latex B with an average particle diameter $d_{50}$ of 340 to 480 nm,
wherein the polybutadiene latexes A and B were obtained by seed polymerization starting from at least one, preferably one, polybutadiene latex C (as seed latex) with an average particle diameter $d_{50}$ of 10 to 220 nm;

(II) at least one graft rubber P-II obtained by emulsion polymerization of styrene and acrylonitrile in a styrene:acrylonitrile weight ratio of 95:5 to 50:50, wherein styrene and/or acrylonitrile can be partially replaced by alpha-methylstyrene, methyl methacrylate and/or N-phenylmaleimide, using at least one organic and/or inorganic peroxide compound as initiator, in the presence of the at least one polybutadiene latex C with an average particle diameter $d_{50}$ of 10 to 220 nm, preferably 30 to 200 nm; and
(III) optionally one or more additives and/or processing aids D;

wherein the average particle diameter $d_{50}$ is determined by disk centrifuge measurement,
**characterized in that** - independently of one another - during the preparation of the graft rubber P-I and during the preparation of the graft rubber P-II,

- the dosing of the monomers and the dosing of the initiator are started simultaneously;
- the monomers are dosed continuously within 3.50 to 4.25 hours, preferably 3.75 to 4.25 hours, in particular 4 hours;
- the entire amount of initiator is dosed within 4.50 to 5.25 h, preferably 4.75 to 5.25 h, in particular 5 h, wherein the dosing rate of the initiator in the first 20 to 40 minutes, preferably 25 to 35 minutes, in particular 30 minutes, is 0.25 to 0.75 parts by weight per hour, preferably 0.4 to 0.6 parts by weight per hour (based on the total amount of monomer in the emulsion polymerization and the solid of the polybutadiene latexes), and thereafter the dosing rate of the initiator is 0.03 to 0.08 parts by weight per hour, preferably 0.05 to 0.06 parts by weight per hour.

2. Mixture P according to claim 1, wherein the graft rubber P-I was obtained by emulsion polymerization of styrene and acrylonitrile in a weight ratio of from 80:20 to 65:35 in the presence of polybutadiene latexes A and B; and the graft rubber P-II was obtained by emulsion polymerization of styrene and acrylonitrile in a weight ratio of from 80:20 to 65:35 in the presence of polybutadiene latex C.

3. Mixture P according to claim 1 or 2, wherein the polybutadiene latex A has an average particle diameter $d_{50}$ of 240 to 320 nm, in particular 250 to 310 nm, and a gel content of 30 to 80% by weight, preferably 40 to 75% by weight, in particular 45 to 70% by weight; the polybutadiene latex B has an average particle diameter $d_{50}$ of 350 to 470 nm, in particular 360 to 460 nm, and a gel content of 50 to 95% by weight, in particular 55 to 90% by weight; and the polybutadiene latex C has an average particle diameter $d_{50}$ of 20 to 210 nm, in particular 30 to 200 nm, and a gel content of 30 to 98% by weight, preferably 40 to 95% by weight, in particular 50 to 92% by weight,
wherein the gel content is determined by the wire cage method in toluene.

4. Mixture P according to any one of claims 1 to 3, wherein the weight ratio of the solids of the polybutadiene latexes A:B is from 90:10 to 10:90, preferably 80:20 to 20:80, in particular 60:40 to 40:60.

5. Mixture P according to any one of claims 1 to 4, wherein the weight ratio of the graft rubbers P-I:P-II is 90:10 to 10:90, preferably 80:20 to 20:80, more preferably 70:30 to 35:65.

6. Mixture P according to any one of claims 1 to 5, wherein the graft rubber P-I consists of:

15 to 60% by weight, in particular 20 to 50% by weight, of a graft shell obtained by emulsion polymerization of styrene and acrylonitrile, wherein styrene and/or acrylonitrile can be partially replaced by alpha-methylstyrene,

methyl methacrylate, N-phenylmaleimide or mixtures thereof; and
40 to 85% by weight, in particular 50 to 80% by weight, of a graft base comprising the polybutadiene latices A and B; und
the graft rubber P-II consists of:

15 to 60% by weight, in particular 20 to 50% by weight, of a graft shell obtained by emulsion polymerization of styrene and acrylonitrile, wherein styrene and/or acrylonitrile can be partially replaced by alpha-methylstyrene, methyl methacrylate, N-phenylmaleimide or mixtures thereof; and
40 to 85% by weight, in particular 50 to 80% by weight, of a graft base of polybutadiene latex C.

**7.** Process for preparing a mixture P according to any one of claims 1 to 6, comprising the following steps:

(i) providing at least one polybutadiene latex C with an average particle diameter $d_{50}$ of 10 to 220 nm;
(ii) preparing at least one polybutadiene latex A having an average particle diameter $d_{50}$ of 230 to 330 nm and at least one polybutadiene latex B having an average particle diameter $d_{50}$ of 340 to 480 nm by seed polymerization on the polybutadiene latex C from step (i);
(iii) preparing a graft rubber P-I by emulsion polymerization of styrene and acrylonitrile in a weight ratio of 95:5 to 50:50, wherein styrene and/or acrylonitrile can be partially replaced by alpha-methylstyrene, methyl methacrylate and/or N-phenylmaleimide, using at least one organic and/or inorganic peroxide compound as initiator, in the presence of the polybutadiene latexes A and B from step (ii);
(iv) preparing a graft rubber P-II by emulsion polymerization of styrene and acrylonitrile in a weight ratio of 95:5 to 50:50, wherein styrene and/or acrylonitrile can be partially replaced by alpha-methylstyrene, methyl methacrylate and/or N-phenylmaleimide, using at least one organic and/or inorganic peroxide compound as initiator, in the presence of the polybutadiene latex C from step (i);
wherein in steps (iii) and (iv) - independently of one another -

- the dosing of the monomers and the dosing of the initiator are started simultaneously;
- the dosing of the monomers takes place continuously within 3.50 to 4.25 hours;
- the entire amount of the initiator is dosed within 4.50 to 5.25 hours, wherein the dosing rate of the initiator in the first 20 to 40 minutes is 0.25 to 0.75 parts by weight per hour (based on the total amount of monomer in the emulsion polymerization and the solid of the polybutadiene latexes), and thereafter the dosing rate of the initiator is 0.03 to 0.08 parts by weight per hour;

(v) optionally mixing the emulsions containing the graft rubbers P-I and P-II from steps (iii) and (iv);
(vi) processing the graft rubbers P-I and P-II from steps (iii) and (iv) or step (v), and
(vii) if step (v) is not available, mixing the graft rubbers P-I and P-II from step (vi).

**8.** Process for preparing a mixture P according to claim 7, wherein in steps (iii) and (iv) - independently of one another - the emulsion polymerization is carried out in such a way that within 100 to 180 minutes, preferably 110 to 150 minutes, after the start of dosing of the initiator and the monomers, a temperature minimum is passed through which has a temperature which is at least 1 to 10 °C, preferably 2 to 8 °C, lower than the temperature at the start of dosing.

**9.** Process for preparing a mixture P according to claim 8, wherein the temperature at the beginning of the dosing of the initiator and the monomers is 58 to 68°C, preferably 59 to 66°C; the temperature at the minimum temperature is 54 to 64°C, preferably 55 to 62°C, and the temperature at the end of the dosing of the initiator is 75 to 90°C, preferably 78 to 85°C.

**10.** Process for preparing a mixture P according to claim 7, wherein the dosing rate of the initiator in the first 20 to 40 minutes is 0.4 to 0.6 parts by weight per hour, and thereafter the dosing rate of the initiator is 0.05 to 0.06 parts by weight per hour.

**11.** Process for preparing a mixture P according to any one of claims 7 to 10, wherein the processing according to step (vi) comprises:

(vi-1) precipitation (optionally co-precipitation) of the graft rubbers P-I and P-II from the emulsion comprising these graft rubbers from steps (iii) and (iv) or step (v);
(vi-2) separation of the precipitated graft rubbers P-I and P-II from step (vi-1) by filtration or centrifugation; and
(vi-3) optionally, drying of the separated graft rubbers P-I and P-II from step (vi-2).

**12.** Process for preparing a mixture P according to any one of claims 7 to 11, wherein step (v) is present.

**13.** Mixture P according to any one of claims 1 to 6, obtained by the process according to any one of claims 7 to 12.

**14.** Thermoplastic molding composition F containing components (a) to (d):

(a) mixture P according to any one of claims 1 to 6 or claim 13;
(b) at least one rubber-free copolymer matrix P-III of styrene and acrylonitrile in a weight ratio of 95:5 to 50:50, preferably 80:20 to 65:35, wherein styrene can be partially replaced by alpha-methylstyrene and/or acrylonitrile by maleic anhydride;
(c) optionally at least one thermoplastic polymer T not composed of vinyl monomers; and
(d) optionally one or more additives and/or processing aids D'.

**15.** Thermoplastic molding composition F according to claim 14, wherein the at least one thermoplastic polymer T not composed of vinyl monomers is selected from the group consisting of: aromatic polycarbonates, aromatic polyester carbonates, polyesters, and polyamides.

**16.** Thermoplastic molding composition F according to claim 14 or 15 containing:

(a) 4.5 to 57.5% by weight of the mixture P according to any one of claims 1 to 6 or claim 10;
(b) 22.5 to 95.5% by weight of rubber-free copolymer P-III;
(c) 0 to 10% by weight of thermoplastic polymers T not composed of vinyl monomers; and
(d) 0 to 10% by weight of one or more additives and/or processing aids D';

wherein the sum of components (a) to (d) is 100% by weight.

**17.** Thermoplastic molding composition F according to claim 14 or 15 containing:

(a) 4.5 to 57.5% by weight of the mixture P according to any one of claims 1 to 6 or claim 10;
(b) 15 to 40% by weight of at least one rubber-free copolymer matrix P-III;
(c) 25 to 55% by weight of one or more thermoplastic polymers T not composed of vinyl monomers; and
(d) 0 to 10% by weight of one or more additives and/or processing aids D';

wherein the sum of components (a) to (d) is 100% by weight.

**18.** Process for preparing a thermoplastic molding composition F according to any one of claims 14 to 17, wherein components (a), (b) and optionally (c) and/or (d) are mixed and compounded in the melt, preferably at a temperature of 200 to 300°C.

**19.** Molded article of a molding composition F according to any one of claims 14 to 17 obtainable by injection molding, extrusion, blow molding or deep drawing.

**20.** Use of a molding composition F according to any one of claims 14 to 17 or a molded article according to claim 19 for housing parts or components in the household, office, automotive and/or garden sector.

**Revendications**

**1.** Mélange P contenant :

(I) au moins un caoutchouc greffé P-I, obtenu par polymérisation en émulsion de styrène et d'acrylonitrile dans un rapport pondéral styrène:acrylonitrile de 95:5 à 50:50, le styrène et/ou l'acrylonitrile pouvant être partiellement remplacés par de l'alpha-méthylstyrène, du méthacrylate de méthyle et/ou du N-phénylmaléimide, en utilisant au moins un composé peroxyde organique et/ou inorganique, de préférence inorganique, en tant qu'initiateur, en présence de :

au moins un latex de polybutadiène A ayant un diamètre moyen de particules $d_{50}$ de 230 à 330 nm et au moins un latex de polybutadiène B ayant un diamètre moyen de particules $d_{50}$ de 340 à 480 nm,

les latex de polybutadiène A et B ayant été obtenus par polymérisation d'ensemencement à partir d'au moins un, de préférence un, latex de polybutadiène C (en tant que latex d'ensemencement) ayant un diamètre moyen de particules $d_{50}$ de 10 à 220 nm ;

(II) au moins un caoutchouc greffé P-II obtenu par polymérisation en émulsion de styrène et d'acrylonitrile dans un rapport pondéral styrène:acrylonitrile de 95:5 à 50:50, le styrène et/ou l'acrylonitrile pouvant être partiellement remplacés par l'alpha-méthylstyrène, le méthacrylate de méthyle et/ou le N-phénylmaléimide, en utilisant au moins un composé peroxydé organique et/ou inorganique en tant qu'initiateur, en présence dudit au moins un latex de polybutadiène C ayant un diamètre moyen de particules $d_{50}$ de 10 à 220 nm, de préférence de 30 à 200 nm ; et

(III) éventuellement un ou plusieurs additifs et/ou auxiliaires technologiques D ;

le diamètre moyen des particules $d_{50}$ étant déterminé par mesure de centrifugeuse à disque,
**caractérisé en ce que** - indépendamment l'un de l'autre - lors de la préparation du caoutchouc greffé P-I et lors de la préparation du caoutchouc greffé P-II,

- le dosage des monomères et le dosage de l'initiateur sont lancés simultanément ;
- le dosage des monomères est effectué en continu dans un délai de 3,50 à 4,25 heures, de préférence de 3,75 à 4,25 heures, en particulier de 4 heures ;
- la quantité totale de l'initiateur est dosée en l'espace de 4,50 à 5,25 h, de préférence de 4,75 à 5,25 h, en particulier de 5 h, le taux de dosage de l'initiateur pendant les 20 à 40 premières minutes, de préférence de 25 à 35 minutes, en particulier de 30 minutes, étant de 0,25 à 0,75 partie en poids par heure, de préférence de 0,4 à 0,6 partie en poids par heure (par rapport à la quantité totale de monomère lors de la polymérisation en émulsion et de la matière solide des latex de polybutadiène), et ensuite le taux de dosage de l'initiateur est de 0,03 à 0,08 partie en poids par heure, de préférence de 0,05 à 0,06 partie en poids par heure.

**2.** Mélange P selon la revendication 1, dans lequel le caoutchouc greffé P-I a été obtenu par polymérisation en émulsion de styrène et d'acrylonitrile dans un rapport pondéral de 80:20 à 65:35, en présence des latex de polybutadiène A et B ; et le caoutchouc greffé P-II a été obtenu par polymérisation en émulsion de styrène et d'acrylonitrile dans un rapport pondéral de 80:20 à 65:35 en présence du latex de polybutadiène C.

**3.** Mélange P selon la revendication 1 ou 2, dans lequel le latex de polybutadiène A présente un diamètre de particule moyen $d_{50}$ de 240 à 320 nm, en particulier de 250 à 310 nm, et une teneur en gel de 30 à 80 % en poids, de préférence de 40 à 75 % en poids, en particulier de 45 à 70 % en poids ; le latex de polybutadiène B présente un diamètre moyen de particules $d_{50}$ de 350 à 470 nm, en particulier de 360 à 460 nm, et une teneur en gel de 50 à 95 % en poids, en particulier de 55 à 90 % en poids ; et le latex de polybutadiène C présente un diamètre moyen de particules $d_{50}$ de 20 à 210 nm, en particulier de 30 à 200 nm, et une teneur en gel de 30 à 98 % en poids, de préférence de 40 à 95 % en poids, en particulier de 50 à 92 % en poids,
la teneur en gel étant déterminée par détermination selon la méthode de la cage à fils dans le toluène.

**4.** Mélange P selon l'une des revendications 1 à 3, dans lequel le rapport pondéral des matières solides des latex de polybutadiène A:B est de 90:10 à 10:90, de préférence de 80:20 à 20:80, en particulier de 60:40 à 40:60.

**5.** Mélange P selon l'une des revendications 1 à 4, dans lequel le rapport pondéral des caoutchoucs greffés P-I:P-II est de 90:10 à 10:90, de préférence de 80:20 à 20:80, de manière particulièrement préférée de 70:30 à 35:65.

**6.** Mélange P selon l'une des revendications 1 à 5, dans lequel le caoutchouc greffé P-I est constitué de :

15 à 60 % en poids, en particulier 20 à 50 % en poids, d'une enveloppe de greffage obtenue par polymérisation en émulsion de styrène et d'acrylonitrile, le styrène et/ou l'acrylonitrile pouvant être partiellement remplacés par de l'alpha-méthylstyrène, du méthacrylate de méthyle, du N-phénylmaléimide ou des mélanges de ceux-ci ; et
40 à 85 % en poids, en particulier 50 à 80 % en poids, d'une base de greffage constituée des latex de polybutadiène A et B ; et
le caoutchouc greffé P-II est composé de :

15 à 60 % en poids, en particulier 20 à 50 % en poids, d'une enveloppe de greffage obtenue par polymérisation en émulsion de styrène et d'acrylonitrile, le styrène et/ou l'acrylonitrile pouvant être partiellement remplacés par de l'alpha-méthylstyrène, du méthacrylate de méthyle, du N-phénylmaléimide ou des mélanges de ceux-ci ; et
40 à 85 % en poids, en particulier 50 à 80 % en poids, d'une base de greffage de latex de polybutadiène C.

**7.** Procédé de préparation d'un mélange P selon l'une des revendications 1 à 6, comprenant les étapes suivantes :

(i) Mise à disposition d'au moins un latex de polybutadiène C ayant un diamètre moyen de particule $d_{50}$ de 10 à 220 nm ;
(ii) préparation d'au moins un latex de polybutadiène A ayant un diamètre moyen de particules $d_{50}$ de 230 à 330 nm et d'au moins un latex de polybutadiène B ayant un diamètre moyen de particules $d_{50}$ de 340 à 480 nm par polymérisation d'ensemencement sur le latex de polybutadiène C de l'étape (i) ;
(iii) préparation d'un caoutchouc greffé P-I par polymérisation en émulsion de styrène et d'acrylonitrile dans un rapport pondéral de 95:5 à 50:50, le styrène et/ou l'acrylonitrile pouvant être partiellement remplacés par de l'alpha-méthylstyrène, du méthacrylate de méthyle et/ou du N-phénylmaléimide, en utilisant au moins un composé peroxydé organique et/ou inorganique en tant qu'initiateur, en présence des latex de polybutadiène A et B de l'étape (ii) ;
(iv) préparation d'un caoutchouc greffé P-II par polymérisation en émulsion de styrène et d'acrylonitrile dans un rapport pondéral de 95:5 à 50:50, le styrène et/ou l'acrylonitrile pouvant être partiellement remplacés par de l'alpha-méthylstyrène, du méthacrylate de méthyle et/ou du N-phénylmaléimide, en utilisant au moins un composé peroxyde organique et/ou inorganique en tant qu'initiateur, en présence du latex de polybutadiène C de l'étape (i) ;
où, dans les étapes (iii) et (iv) - indépendamment l'une de l'autre -

• le dosage des monomères et le dosage de l'initiateur sont lancés simultanément ;
• le dosage des monomères est effectué en continu dans un délai de 3,50 à 4,25 heures ;
• la quantité totale de l'initiateur est dosée en 4,50 à 5,25 heures, le taux de dosage de l'initiateur étant de 0,25 à 0,75 partie en poids par heure (par rapport à la quantité totale de monomère lors de la polymérisation en émulsion et de la matière solide des latex de polybutadiène) pendant les 20 à 40 premières minutes, et ensuite le taux de dosage de l'initiateur étant de 0,03 à 0,08 partie en poids par heure ;

(v) éventuellement mélange des émulsions contenant les caoutchoucs greffés P-I et P-II des étapes (iii) et (iv) ;
(vi) traitement des caoutchoucs greffés P-I et P-II des étapes (iii) et (iv) ou de l'étape (v), et
(vii) si l'étape (v) n'est pas présente, mélange des caoutchoucs greffés P-I et P-II de l'étape (vi).

**8.** Procédé de préparation d'un mélange P selon la revendication 7, dans lequel, dans les étapes (iii) et (iv) - indépendamment l'une de l'autre - la polymérisation en émulsion est effectuée de telle sorte que, dans un délai de 100 à 180 minutes, de préférence de 110 à 150 minutes, après le début du dosage de l'initiateur et des monomères, on passe par un minimum de température qui présente une température qui est inférieure d'au moins 1 à 10 °C, de préférence de 2 à 8 °C, à la température au début du dosage.

**9.** Procédé de préparation d'un mélange P selon la revendication 8, dans lequel la température au début du dosage de l'initiateur et des monomères est de 58 à 68 °C, de préférence de 59 à 66 °C; la température minimale est de 54 à 64 °C, de préférence de 55 à 62 °C, et la température à la fin du dosage de l'initiateur est de 75 à 90 °C, de préférence de 78 à 85 °C.

**10.** Procédé de préparation d'un mélange P selon la revendication 7, dans lequel le taux de dosage de l'initiateur est de 0,4 à 0,6 partie en poids par heure pendant les 20 à 40 premières minutes, et ensuite le taux de dosage de l'initiateur est de 0,05 à 0,06 partie en poids par heure.

**11.** Procédé de préparation d'un mélange P selon l'une des revendications 7 à 10, dans lequel le traitement selon l'étape (vi) comprend :

(vi-1) Précipitation (éventuellement coprécipitation) des caoutchoucs greffés P-I et P-II à partir de l'émulsion comprenant ces caoutchoucs greffés des étapes (iii) et (iv) ou de l'étape (v) ;
(vi-2) séparation des caoutchoucs greffés précipités P-I et P-II de l'étape (vi-1) par filtration ou centrifugation ; et
(vi-3) éventuellement, séchage des caoutchoucs greffés P-I et P-II séparés de l'étape (vi-2).

**12.** Procédé de préparation d'un mélange P selon l'une des revendications 7 à 11, dans lequel l'étape (v) est présente.

**13.** Mélange P selon l'une des revendications 1 à 6, obtenu par le procédé selon l'une des revendications 7 à 12.

**14.** Masse de moulage thermoplastique F contenant les composants (a) à (d) :

(a) Mélange P selon l'une des revendications 1 à 6 ou la revendication 13 ;
(b) au moins une matrice copolymère P-III sans caoutchouc, constituée de styrène et d'acrylonitrile dans un rapport pondéral de 95:5 à 50:50, de préférence de 80:20 à 65:35, le styrène pouvant être partiellement remplacé par de l'alpha-méthylstyrène et/ou l'acrylonitrile par de l'anhydride maléique ;
(c) éventuellement au moins un polymère thermoplastique T non constitué de monomères vinyliques ; et
(d) éventuellement un ou plusieurs additifs et/ou auxiliaires technologiques D'.

**15.** Masse de moulage thermoplastique F selon la revendication 14, dans laquelle ledit au moins un polymère thermoplastique T non constitué de monomères vinyliques est choisi dans le groupe constitué par : les polycarbonates aromatiques, les polyestercarbonates aromatiques, les polyesters, et les polyamides.

**16.** Masse de moulage thermoplastique F selon la revendication 14 ou 15 contenant :

(a) 4,5 à 57,5 % en poids du mélange P selon l'une des revendications 1 à 6 ou la revendication 10 ;
(b) 22,5 à 95,5 % en poids de copolymère sans caoutchouc P-III ;
(c) 0 à 10 % en poids de polymères thermoplastiques T non constitués de monomères vinyliques ; et
(d) 0 à 10 % en poids d'un ou plusieurs additifs et/ou auxiliaires technologiques D' ;

la somme des composants (a) à (d) étant de 100 % en poids.

**17.** Masse de moulage thermoplastique F selon la revendication 14 ou 15 contenant :

(a) 4,5 à 57,5 % en poids du mélange P selon l'une des revendications 1 à 6 ou la revendication 10 ;
(b) 15 à 40 % en poids d'au moins une matrice copolymère sans caoutchouc P-III;
(c) 25 à 55 % en poids d'un ou plusieurs polymères thermoplastiques T non constitués de monomères vinyliques ; et
(d) 0 à 10 % en poids d'un ou plusieurs additifs et/ou auxiliaires technologiques D' ;

la somme des composants (a) à (d) étant de 100 % en poids.

**18.** Procédé de préparation d'une masse de moulage thermoplastique F selon l'une des revendications 14 à 17, dans lequel les composants (a), (b) et éventuellement (c) et/ou (d) sont mélangés et compoundés à l'état fondu, de préférence à une température de 200 à 300 °C.

**19.** Pièce moulée à partir d'une masse de moulage F selon l'une des revendications 14 à 17, pouvant être obtenu par moulage par injection, extrusion, moulage par soufflage ou par emboutissage.

**20.** Utilisation d'une masse de moulage F selon l'une des revendications 14 à 17 ou d'une pièce moulée selon la revendication 19 pour des pièces de boîtier ou des composants dans le domaine de la maison, du bureau, de l'automobile et/ou du jardin.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0845496 A
- WO 200162848 A
- WO 2016184765 A
- WO 2017093468 A
- WO 2018197377 A
- DE 3639904 A
- DE 3913509 A
- WO 2017093468 A1
- EP 867463 A
- DE 2420358 A
- DE 2724360 A
- DE 19713509 A
- DE 1495626 A
- DE 2232877 A
- DE 2703376 A
- DE 2714544 A
- DE 3000610 A
- DE 3832396 A
- DE 10008420 A
- WO 2012022710 A
- DE 3077934 A
- DE 2842005 A
- US 3419634 A
- DE 3334782 A
- DE 2940024 A
- DE 3007934 A


### In der Beschreibung aufgeführte Nicht-Patentliteratur


- **KRISCHER** ; **KRÖLL**. Trocknungstechnik, Zweiter Band, Trockner und Trocknungsverfahren. Springer-Verlag, 1959
- *CHEMICAL ABSTRACTS*, 693-36-7
- *CHEMICAL ABSTRACTS*, 2082-79-3
- *CHEMICAL ABSTRACTS*, 68610-51-5
- *CHEMICAL ABSTRACTS*, 52829-07-9
- *CHEMICAL ABSTRACTS*, 167078-06-0
- *CHEMICAL ABSTRACTS*, 86403-32-9
- **K. KIRCHNER** ; **H. SCHLAPKOHL**. The Formation of Oligomers in the Thermal Copolymerisation of the Styrene/Acrylonitrile- System. *Makromol. Chem.*, 1976, vol. 177, 2031-2042